(19) Europäisches Patentamt
European Patent Office
Office européen des brevets

(11) **EP 3 910 294 B1**

(12) **EUROPÄISCHE PATENTSCHRIFT**

(45) Veröffentlichungstag und Bekanntmachung des Hinweises auf die Patenterteilung:
**31.01.2024 Patentblatt 2024/05**

(21) Anmeldenummer: **20173794.7**

(22) Anmeldetag: **11.05.2020**

(51) Internationale Patentklassifikation (IPC):
*G01F 1/66* (2022.01)    *G01N 29/44* (2006.01)
*G01K 17/10* (2006.01)    *F28F 27/00* (2006.01)
*G01N 29/024* (2006.01)    *G01N 29/032* (2006.01)
*G01N 29/32* (2006.01)    *G01F 1/667* (2022.01)
*G01K 11/24* (2006.01)

(52) Gemeinsame Patentklassifikation (CPC):
**G01N 29/024; G01F 1/668; G01K 11/24;**
**G01K 17/10; G01N 29/032; G01N 29/326;**
**G01N 29/4436; G01N 29/4463;** G01N 2291/0222;
G01N 2291/0224; G01N 2291/02809;
G01N 2291/102

(54) **BESTIMMUNG DES MISCHUNGSVERHÄLTNISSES INSBESONDERE EINES WASSER-/GLYKOL-GEMISCHS MITTELS ULTRASCHALL SOWIE EINE DARAUF BASIERENDE WÄRMESTROMMESSUNG**

DETERMINATION OF THE MIXING RATIO, IN PARTICULAR OF A WATER/GLYCOL MIX, BY MEANS OF ULTRASOUND AND A THERMAL FLOW MEASUREMENT BASED THEREON

DÉTERMINATION DU RAPPORT DE MÉLANGE, EN PARTICULIER D'UN MÉLANGE D'EAU ET DE GLYCOL AU MOYEN DES ULTRASONS AINSI QUE MESURE DE FLUX THERMIQUE À BASE DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.11.2021 Patentblatt 2021/46**

(73) Patentinhaber: **Siemens Schweiz AG**
**8047 Zürich (CH)**

(72) Erfinder: **Konrad, Hilmar**
**6340 Baar (CH)**

(74) Vertreter: **Siemens Patent Attorneys**
**Postfach 22 16 34**
**80506 München (DE)**

(56) Entgegenhaltungen:
**EP-A1- 3 467 490**    **WO-A1-2012/065276**
**JP-B2- 6 586 351**

**Beschreibung**

Die vorliegende Erfindung betrifft die Bestimmung eines von einem wärmetransportierenden Wasser-/Glykol-Gemisch abgehenden Wärmestroms mittels Ultraschall. Das Gemisch ist für einen technischen Prozess in einer Vorrichtung oder in einer Anlage, insbesondere der Heizungs-, Lüftungs-, Klima- und Kältetechnik, vorgesehen. Das Wasser-/Glykol-Gemisch wird typischerweise als wärmetransportierendes bzw. kältetransportierendes Medium eingesetzt.

Im Folgenden ist das Mischungsverhältnis des Wasser-/Glykol-Gemischs als Quotient aus dem Volumenanteil des Glykols und aus der Summe der Volumenanteile des Wassers und Glykols festgelegt. Dieser Quotient entspricht somit der Konzentration des Glykols und liegt im Bereich von 0% bis 100%.

Die Erfindung betrifft weiterhin eine Anordnung für das Messen eines Wärmestroms zum Ausführen des erfindungsgemässen Verfahrens. Zudem betrifft die Erfindung eine Wärmestrommesseinrichtung für die Wärmestrommessung, insbesondere einen Wärmeenergiezähler, sowie ein regelbares Durchflussventil mit einer derartigen Wärmestrommesseinrichtung zum Ausführen des erfindungsgemässen Verfahrens.

Der Fokus der vorliegenden Anmeldung liegt daher auch auf der automatischen Bestimmung des Mischungsverhältnisses in intelligenten (smarten) regelbaren Durchflussventilen. Die Kenntnis des Glykol-Gehalts in einem Gemisch aus Wasser und Glykol ermöglicht eine adäquate Verarbeitung der Wärme- bzw. Kälteübertragung durch das Ventil.

Eine internationale Patentanmeldung WO 2012/065276 A1 wurde am 19. Oktober 2011 angemeldet. Die Anmeldung wurde veröffentlicht am 24. Mai 2012. WO 2012/065276 A1 behandelt die Bestimmung eines Wärmestromes aus einer wärmetransportierenden Flüssigkeit. Gemäss WO 2012/065276 A1 sind in einer Vorrichtung 10 zur Messung eines Wärmeflusses zwei Ultraschall-Wandler 14, 15 angeordnet. Die Ultraschall-Wandler kommunizieren mit einem Regler 19. Der Regler 19 wiederum ist mit einer Auswerteeinheit 20 verbunden. Zusätzlich umfasst die Vorrichtung 10 einen Temperaturfühler 17, welcher zwischen den beiden Ultraschall-Wandlern angeordnet ist.

In der Vorrichtung 10 aus WO 2012/065276 A1 wird nun anhand des Temperaturfühlers 10 die absolute Temperatur eines Fluids bestimmt. Zugleich wird anhand der Ultraschall-Wandler 14, 15 die Schallgeschwindigkeit im Fluid gemessen. Aus der absoluten Temperatur und aus der gemessenen Schallgeschwindigkeit kann nun auf Dichte und Mischungsverhältnis eines Wasser-/Glykol-Gemischs geschlossen werden.

Dem Mischungsverhältnis können zudem die Dichte und die spezifische Wärme des Wasser-/Glykol-Gemischs zugeordnet werden. Letztendlich kann dann aus dem Volumenstrom, der Temperaturdifferenz, der Dichte sowie aus der spezifischen Wärmekapazität auf die Wärme- bzw. Kälteleistung bestimmt werden.

Aus dem japanischen Patent JP 6586351 B2 ist ein Gaszähler bekannt, der zur messtechnischen Bestimmung des Mischungsverhältnisses eines durchströmenden Erdgasgemisches eingerichtet ist. Das Erdgasgemisch wird von Erdgasversorgungsunternehmen zur Energieversorgung von Haushalten geliefert. Die messtechnische Bestimmung erfolgt auf einer versuchstechnisch ermittelten Tabelle mit Ultraschalldämpfungswerten für die wichtigsten Erdgaskomponenten Methan, Ethan, Propan und Stickstoff bei jeweils mehreren Ultraschallfrequenzen. Dadurch ist der genaue Brennwert des durchströmenden Erdgases bestimmbar.

Aus der EP 3 467 490 A1 ist die Bestimmung einer Flüssigkeitsart, insbesondere einer wässrigen Harnstofflösung in einem Tank eines Automobils, bekannt. Dies wird dadurch erreicht, dass zunächst ein erstes Ultraschallsignal in die Flüssigkeit gesendet wird und aus dem ersten Ultraschallsignal automatisch die Schallgeschwindigkeit der Flüssigkeit bestimmt wird. Danach wird ein zweites Ultraschallsignal in die Flüssigkeit gesendet und zur automatischen Bestimmung einer Dämpfung oder Absorption bei mindestens einer Frequenz des zweiten Ultraschallsignals verwendet. Aus der Schallgeschwindigkeit und der Dämpfung bei einer Frequenz wird die Flüssigkeitsart bestimmt.

Am 29. März 2007 wurde in Deutschland eine Patentanmeldung DE 10 2007 015 609 A1, Kälte- oder Wärmezählereinrichtung zur Ermittlung des Energieverbrauchs in einem Temperierungskreislauf, eingereicht. Die gleiche Patentanmeldung wurde am 9. Oktober 2008 veröffentlicht. DE 10 2007 015 609 A1 offenbart eine Messvorrichtung 2 mit Ultraschall-Messköpfen 4 zum Bestimmen von Durchflussmengen. Die Messvorrichtung 2 umfasst auch zwei Temperatursonden 9 zum Erfassen des Temperaturabfalls zwischen dem Vorlauf- und dem Rücklaufende. Die Temperatursonden 9 sowie die Ultraschall-Messköpfe 4 sind mit einer Steuerung 12 verbunden.

Die Messvorrichtung 2 von DE 10 2007 015 609 A1 bietet ein Mikroanemometer 13. Das Mikroanemometer 13 ist zwischen Vorlauf- und Rücklaufseite angeordnet und verbindet sich ebenfalls mit der Steuerung 12. Eine Schätzung k in Bezug auf die spezifische Wärme ergibt sich aus den vom Mikroanemometer 13 erfassten Werten. Das Mikroanemometer 13 ermöglicht es somit, Werte von k in eine Wärmestromschätzung einzubeziehen. Es ist vorstellbar, aus den Werten von k auf die Zusammensetzung eines Wasser-/Glykol-Gemischs zu schliessen.

Abgesehen von den Ansätzen aus DE 10 2007 015 609 A1 und aus WO 2012/065276 A1 ist eine manuelle Eingabe möglich. Anstatt ein Mischungsverhältnis automatisch zu bestimmen, erfordert der manuelle, jedoch fehleranfällige Ansatz eine Eingabe durch einen Benutzer. Der Ansatz setzt eine hinreichende Kenntnis des Mischungsverhältnisses eines Wasser-/Glykol-Gemischs in den Rohrleitungen einer Heizungs-, Lüftungs- und Klimaanlage voraus.

Ausgehend von der WO 2012/065276 A1 ist es eine Aufgabe der Erfindung, ein alternatives und/oder robusteres Messverfahren zur Bestimmung eines von einem wärmetransportierenden Wasser-/Glykol-Gemisch abgehenden Wärmestroms anzugeben.

Für die weitere Beschreibung gilt zur Vermeidung unnötiger Wiederholungen, dass Merkmale und Details, die im Zusammenhang mit dem erfindungsgemässen Verfahren zum Bestimmen des Mischungsverhältnisses eines Gemisches sowie im Zusammenhang mit dem erfindungsgemässen Verfahren zum Bestimmen eines von einem wärmetransportierenden Fluid abgehenden Wärmestroms beschrieben sind, selbstverständlich auch im Zusammenhang mit und im Hinblick auf die zur Durchführung des Verfahrens eingerichtete Anordnung für das Messen eines Wärmestroms sowie auf die zur Durchführung des Verfahrens eingerichtete Wärmestrommesseinrichtung und regelbares Durchlassventil (Smart Valve) gelten und umgekehrt.

Die Aufgabe der vorliegenden Erfindung wird durch ein Verfahren zum Bestimmen eines von einem wärmetransportierenden Wasser-/Glykol-Gemisch abgehenden Wärmestroms gelöst, wobei das Wasser-/Glykol-Gemisch von einer Eintrittsposition durch einen mit dem Wasser-/Glykol-Gemisch ausgefüllten Messabschnitt zu einer Austrittsposition strömt. Das Wasser-/Glykol-Gemisch weist an der Eintrittsposition eine Eintrittstemperatur, insbesondere eine Vorlauftemperatur, und an der Austrittsposition eine aufgrund des vom Wasser-/Glykol-Gemisch abgehenden Wärmestroms niedrigere Austrittstemperatur, insbesondere eine Rücklauftemperatur, auf. Das Verfahren umfasst folgende Schritte umfasst:

- Erfassen einer Temperaturdifferenz zwischen der Ein- und Austrittstemperatur,
- Messen eines Volumenstroms des zwischen der Ein- und Austrittsposition strömenden Wasser-/Glykol-Gemischs,
- Bestimmen des Mischungsverhältnisses R des Wasser-/Glykol-Gemischs, umfassend folgende Schritte:

  - Einstrahlen eines Ultraschallsignals mit einem Sendepegel entlang einer Messstrecke, wobei die Messstrecke innerhalb des Messabschnitts verläuft,
  - Messen eines Empfangspegels des Ultraschallsignals an einem Ende der Messstrecke,
  - Bestimmen einer Ultraschalldämpfung des durch das Wasser-/Glykol-Gemisch gedämpften Ultraschallsignals, insbesondere aus dem Sende- und Empfangspegel des Ultraschallsignals,
  - Messen der Fluidtemperatur des durch den Messabschnitt hindurchströmenden Wasser-/Glykol-Gemischs, und
  - Bestimmen des Mischungsverhältnisses R des Wasser-/Glykol-Gemischs aus der bestimmten Ultraschalldämpfung und aus der gemessenen Fluidtemperatur,

- Bestimmen einer Dichte und spezifischen Wärme des wärmetransportierenden Wasser-/Glykol-Gemischs aus der gemessenen Fluidtemperatur und aus dem bestimmten Mischungsverhältnis R des wärmetransportierenden Wasser-/Glykol-Gemischs, und
- Bestimmen des vom Wasser-/Glykol-Gemisch ausgehenden Wärmestroms aus dem Produkt aus dem gemessenem Volumenstrom, aus der gemessenen Temperaturdifferenz, aus der bestimmten Dichte und aus der bestimmten spezifischen Wärme.

Die Formel für den ermittelten Wärmestrom lautet somit:

$$dQ/dt = dV/dt \cdot \Delta T \cdot \rho(T, R) \cdot c_P(T, R);$$

Die Klammern (T, R) geben an, dass es sich bei der ermittelten Dichte und spezifischen Wärme um von der Fluidtemperatur T und vom Mischungsverhältnis R des vorzugsweise Wasser-/Glykol-Gemischs abhängige physikalische Grössen handelt. Die physikalische Einheit des ermittelten Wärmestroms ist typischerweise das Watt (W) oder Kilowatt (kW). Es kann somit ein aktueller Wert für die Dichte $\rho$ und spezifische Wärme $c_P$ des wärmetransportierenden Fluids, insbesondere des Wasser-/Glykol-Gemischs, mittels einer (zweiten) Datentabelle oder einer (zweiten) mathematischen Funktion bestimmt werden, welche jeweils das ermittelte Mischungsverhältnis R und die gemessene Fluidtemperatur auf die zu bestimmende Dichte $\rho$ und spezifischen Wärme $c_P$ des wärmetransportierenden Fluids abbilden.

Mittels des erfindungsgemässen Verfahrens ist vorteilhaft eine messtechnisch sehr genaue Bestimmung des vom wärmetransportierenden Fluids zwischen der Eintrittsposition und der Austrittsposition abgegebenen Wärmestroms möglich.

Es wird angemerkt, dass der berechnete Wärmestrom auch negative Werte aufweisen kann. In diesem Fall entspricht der «negative» Wärmestrom einem Kältestrom. Dies ist dann der Fall, wenn die Temperaturdifferenz zwischen der Eintrittsposition und der Austrittsposition negativ ist. Mit anderen Worten handelt es sich hier um einem von einem kältetransportierenden Fluid abgehenden Kältestrom. Dies ist z.B. bei einer Kühleinrichtung in einem Gebäude der Fall.

Der Erfindung beruht auf der Erkenntnis, dass die Einwirkung von Ultraschallwellen auf die Hydroxyl-Gruppen, d.h. auf die OH-Gruppen eines im Wasser gelösten Moleküls, aufgrund von Relaxationsvorgängen verlustbehaftet ist.

Dies trifft insbesondere auf Glykol-Frostschutzmittel (z.B. Antifrogen® N, Glysantin®) zu, die grösstenteils (Mono-)Ethylenglykol, insbesondere Ethan-1,2-diol [$CH_2(OH)$-$CH_2(OH)$], und in geringen Volumenanteilen Korrosionsinhibitoren enthalten. Alternativ oder zusätzlich können Glykol-Frostschutzmittel Propylenglykol, insbesondere 1,2-Propandiol [$CH_3$-$CH(OH)$-$CH_2(OH)$], und in geringen Volumenanteilen Korrosionsinhibitoren enthalten.

Dabei nimmt die Ultraschalldämpfung einerseits mit zunehmender Fluidtemperatur ab und andererseits mit dem Mischungsverhältnis insbesondere des Wasser-/Glykol-Frostschutzmittel zu.

Im einfachsten Fall werden die Dämpfungswerte für die Ultraschalldämpfung messtechnisch ermittelt, indem z.B. die Dämpfungswerte für zunehmende Konzentrationswerte des Glykol-Frostschutzmittels beginnend von = 0 % bis 100 % und jeweils für Temperaturwerte im Bereich von -20 °C bis 80 °C gemessen werden. Für reines Wasser ist dies wegen des Gefrierpunktes von Wasser erst bei Temperaturwerten grösser als 0 °C möglich. Es kann auch ausreichend sein, Dämpfungswerte für die Ultraschalldämpfung auf Basis gröberer Konzentrations- und Temperaturwerte zu messen, wie z.B. in einem Raster von 10 % für die Konzentration des Glykol-Frostschutzmittels und im Raster von 10 °C für die Fluidtemperatur.

Als Gemisch sind z.B. nur Wasser, z.B. Leitungswasser oder entmineralisiertes Wasser, oder eine Mischung aus Wasser und aus mindestens einer weiteren Substanz vorausgewählt aus:

- Calciumchlorid,
- Ethanol,
- Glycerin,
- Kaliumacetat,
- Kaliumformiat,
- Magnesiumchlorid,
- Methanol, und/oder
- Natriumchlorid vorgesehen.

Die vorstehenden Listen sind nicht abschliessend.

Im einfachsten Fall wird ein festfrequentes Ultraschallsignal, z.B. für einen Zeitraum im Bereich von 250 μs bis 30 s, vorzugsweise von 250 μs bis 1 s, in den Messabschnitt eingestrahlt. Das festfrequente Ultraschallsignal ist z.B. ein sinusförmiges, rechteckiges, trapezförmiges oder dreieckiges Ultraschallsignal. Es wird vorzugsweise kontinuierlich in den Messabschnitt eingestrahlt. Insbesondere wird das Ultraschallsignal mit konstanter Sendeamplitude in den Messabschnitt eingestrahlt. Das Ultraschallsignal wird insbesondere in einem Frequenzbereich von 40 kHz bis 50 MHz, vorzugsweise in einem Frequenzbereich von 1 MHz bis 10 MHz, in den Messabschnitt eingestrahlt. Das empfangene Ultraschallsignal wird entsprechend der Sendefrequenz und/oder der Sendedauer und/oder der Sendeamplitude und/oder der Signalform des gesendeten Ultraschallsignals gefiltert, also mittels einer entsprechenden gleichen Empfangsfrequenz. Es wird insbesondere über den Sendezeitraum hinweg gemittelt.

Mit dem Einstrahlen eines Ultraschallsignals entlang einer Messstrecke innerhalb eines Messabschnitts ist gemeint, dass die Hauptausbreitungsrichtung des ausgesendeten Ultraschallsignals entlang dieser Messstrecke verläuft. Der Messabschnitt ist dabei typischerweise ein Rohr bzw. ein Rohrabschnitt oder ein Schlauch bzw. ein Schlauchabschnitt. Er kann aus Metall, Kunststoff, Gummi oder Keramik hergestellt sein. Er weist insbesondere einen kreisförmigen Querschnitt auf.

Im Vergleich zur rechnerischen Ermittlung des Mischungsverhältnisses auf Basis der Messung der Schallgeschwindigkeit des Fluids wie im Stand der Technik, ist die rechnerische Ermittlung des Mischungsverhältnisses auf Basis der Messung der Ultraschalldämpfung deutlich robuster. So ist eine auf eine Ultraschall-Laufzeitmessung basierende Bestimmung der Schallgeschwindigkeit durch Störsignale aufgrund von Streuung von Ultraschallsignalen an Inhomogenitäten, wie z.B. grössere Schmutzpartikel oder Luftbläschen, hinsichtlich der Messauswertung anfälliger.

Das Mischungsverhältnis kann alternativ auf Basis von frequenzabhängigen Vergleichsdämpfungswerten z.B. aus einer zuvor erfolgten Referenzmessreihe für Wasser-/Glykol-Gemische mit verschiedenen Mischungsverhältnissen, bei verschiedenen Fluidtemperaturen und bei jeweils verschiedenen Sendefrequenzen für das in den Messabschnitt eingestrahlte Ultraschallsignal bestimmt werden. Es können zwei, drei oder mehrere voneinander verschiedene Sendefrequenzen und empfangsseitig entsprechend gleiche Filterfrequenzen eingesetzt werden.

Vorzugsweise wird das Mischungsverhältnis der zumindest zwei unterschiedlichen Fluiden des Gemischs nur dann bestimmt, wenn die (mittlere) Strömungsgeschwindigkeit des durch den Messabschnitts hindurchfliessenden Volumenstroms einen vorgegebenen unteren Grenzwert unterschreitet. Der untere Grenzwert kann so bemessen sein, dass eine überwiegend laminare Strömung im Messabschnitt vorliegt. Insbesondere ist der untere Grenzwert kleiner als 2 m/s, vorzugsweise kleiner als 0.5 m/s. Die Strömungsgeschwindigkeit kann z.B. mittels eines bekannten Ultraschall-Laufzeitdifferenzverfahrens oder mittels eines Mikroanemometers gemessen werden.

Nach einer Verfahrensvariante wird ein aktueller Wert des Mischungsverhältnisses mittels einer (ersten) Datentabelle oder (ersten) mathematischen Funktion bestimmt, welche jeweils die Ultraschalldämpfung und die Fluidtemperatur auf das Mischungsverhältnis R, insbesondere auf das Mischungsverhältnis R des Wasser-/Glykol-Gemischs, abbilden. Als (erste) mathematische Funktion kommen z.B. analytische Funktionen oder ein Polynomentwicklungen in Betracht, die den zuvor genannten funktionalen Zusammenhang zumindest annähernd beschreiben. Die Ultraschalldämpfung beschreibt das Verhältnis aus der Signalstärke des empfangenen Ultraschallsignals zu der Signalstärke des gesendeten Ultraschallsignals. Auch wenn die Ultraschalldämpfung aus einem Sendepegel und aus einem gemessenen Empfangspegel des Ultraschallsignals ermittelt wird, so liegt - unabhängig von einer logarithmischen Bemessung - ein Verhältnis zwischen empfangener und gesendeter Signalstärke des Ultraschallsignals zugrunde. Vorzugsweise erfolgt die Bemessung der Ultraschalldämpfung anhand eines dB-Wertes. Eine Messung des Sendepegels des gesendeten Ultraschallsignal am Ort der Einstrahlung in den Messabschnitt ist nicht erforderlich. Die Signalstärke des Ultraschallsignals kann z.B. im Rahmen einer Typprüfung gemessen werden und dann als Referenz für weitere Messanordnungen gemäss der Erfindung dienen.

Nach einer weiteren Verfahrensvariante wird zwischen Anfang und Ende der Messstrecke ein erstes Ultraschallsignal entlang der Messstrecke und ein zweites Ultraschallsignal in Gegenrichtung entlang der Messstrecke eingestrahlt. Es wird aus dem jeweiligen Sende- und Empfangspegel der beiden Ultraschallsignale eine erste und zweite Ultraschalldämpfung bestimmt. Es wird die Ultraschalldämpfung aus dem (arithmetischen) Mittelwert der ersten und zweiten Ultraschalldämpfung bestimmt. Dadurch wird die Messgenauigkeit erhöht. Es können auch eine Mehrzahl von Werten für die Ultraschalldämpfungen in der Hinrichtung und in der Gegenrichtung arithmetisch aufaddiert und durch die Anzahl der erfolgten Messungen dividiert werden. Dadurch erhöht sich die Messgenauigkeit weiter.

Nach einer bevorzugten Verfahrensvariante wird der Volumenstrom mittels eines Ultraschall-Durchflussmessverfahrens bestimmt. Die Bestimmung des Volumenstroms sowie die Bestimmung der Ultraschalldämpfung erfolgen in zeitlich voneinander getrennten Messphasen. Dadurch können vorteilhaft mittels nur eines physikalischen Messprinzips sowohl der Volumenstrom als auch die Ultraschalldämpfung messtechnisch ermittelt werden.

Einer weiteren Verfahrensvariante zufolge wird mittels eines Ultraschall-Laufzeitdifferenzverfahrens die (mittlere) Strömungsgeschwindigkeit $v_M$ des durch einen vorgegebenen Strömungsquerschnitt A des Messabschnitts hindurchströmenden Fluids gemessen. Es wird ein Kompensationsfaktor K für die gemessene mittlere Strömungsgeschwindigkeit $v_M$ aus der gemessenen Fluidtemperatur T und aus dem bestimmten Mischungsverhältnis R des wärmetransportierenden Fluids bestimmt. Letztlich wird dann der Volumenstrom dV/dt aus dem Produkt aus dem Strömungsmessquerschnitt A, aus der gemessenen Strömungsgeschwindigkeit $v_M$ und aus dem Kompensationsfaktor K ermittelt.

Die Formel für den ermittelten Volumenstrom lautet somit:

$$dV/dt = A \cdot K(v_M, \ T, \ R) \cdot v_M;$$

Die Klammer ($v_M$, T, R) gibt an, dass es sich bei dem Kompensationsfaktor um einen von der gemessenen mittleren Strömungsgeschwindigkeit $v_M$, von der Fluidtemperatur T und vom ermittelten Mischungsverhältnis R abhängigen dimensionslosen Faktor handelt. Alternativ kann auch ein weiterer Kompensationsfaktor für den Strömungsquerschnitt A berechnet werden. Die jeweiligen Kompensationsfaktoren können auch als Quotienten dargestellt werden. Die jeweiligen Kompensationsfaktoren können auch ein Kompensationsgeschwindigkeitswert zur Kompensation der gemessenen mittleren Strömungsgeschwindigkeit oder ein Kompensationsflächenwert zur Kompensation des vorgegebenen Strömungsquerschnitts sein. Wesentlich für die Kompensation ist, dass ein korrigierter Volumenstrom ermittelbar ist, der dem tatsächlichen Volumenstrom möglichst nahe kommt.

Grund für die erforderliche Kompensation ist die von der Fluidtemperatur und vom Mischungsverhältnis abhängige dynamische Viskosität. Dies führt dazu, dass sich bei überwiegend laminarer Strömung im Messabschnitt (Rohr) bei kleineren Strömungsgeschwindigkeiten (typ. < 3 m/s) ein Strömungsprofil ausbildet, bei dem die Strömungsgeschwindigkeit in der Rohrmitte am höchsten ist und zur Rohrwand hin stark abnimmt. Dagegen sind die Unterschiede bei überwiegend turbulenter Strömung im Falle höherer Strömungsgeschwindigkeiten (typ. > 3 m/s) erheblich geringer.

Nach einer Verfahrensvariante wird ein aktueller Kompensationswert für die gemessene mittlere Strömungsgeschwindigkeit mittels einer (dritten) Datentabelle oder (dritten) mathematischen Funktion bestimmt, welche jeweils die Fluidtemperatur und das Mischungsverhältnis R auf einen Quotienten aus der tatsächlichen mittleren Strömungsgeschwindigkeit zur gemessenen mittleren Strömungsgeschwindigkeit abbilden.

Im einfachsten Fall werden die Kompensationswerte für den Volumenstrom messtechnisch ermittelt, indem z.B. aktuelle Dämpfungswerte für zunehmende Konzentrationswerte des Glykol-Frostschutzmittels beginnend von 0 % bis 100 %, jeweils für Temperaturwerte im Bereich von -20 °C bis 80 °C, sowie jeweils für zunehmende mittlere Strömungsgeschwindigkeiten im Messabschnitt gemessen werden. Für reines Wasser ist dies wegen des Gefrierpunktes von Wasser erst bei Temperaturwerten grösser als 0 °C möglich. Es kann auch ausreichend sein, die Kompensationswerte auf Basis gröberer Konzentrations-, Temperatur- und Strömungsgeschwindigkeitswerte zu messen, wie z.B. im Raster von 10 % für die Konzentration des Glykol-Frostschutzmittels, im Raster von 10 °C für die Fluidtemperatur, im Raster von 0.1 m/s für kleinere mittlere Strömungsgeschwindigkeiten ($v_M$ < 3m/s) und im Raster von 1 m/s für grössere mittlere Strömungsgeschwindigkeiten ($v_M$ > 3m/s).

Die Aufgabe der Erfindung wird weiterhin gelöst durch eine Anordnung für das Messen eines Wärmestroms zum Ausführen des erfindungsgemässen Verfahrens. Die Anordnung weist auf:

- erste Mittel zum Erfassen einer Temperaturdifferenz zwischen einer Eintritts- und Austrittstemperatur, insbesondere zwischen einer Vor- und Rücklauftemperatur,
- zweite Mittel zum Messen eines Volumenstroms des durch den Messabschnitt strömenden Fluids,
- dritte Mittel zum Bestimmen der Ultraschalldämpfung durch das Fluid im Messabschnitt,
- vierte Mittel zum Erfassen der Fluidtemperatur des durch den Messabschnitt strömenden Fluids, und
- eine Steuereinheit, welche mit den ersten, zweiten, dritten und vierten Mitteln verbunden ist.

Die Steuereinheit ist dazu eingerichtet, den Wärmestrom aus der Temperaturdifferenz, aus dem Volumenstrom, aus der Ultraschalldämpfung und aus der Fluidtemperatur zu bestimmen und ggf. auszugeben. Ein aktueller Watt-Wert des Wärmestroms kann dann z.B. auf einem Display der Anordnung oder über eine kabelgebundene oder drahtlose Schnittstelle an eine externe entfernte Anzeigeeinheit ausgegeben werden.

Die zur Durchführung des erfindungsgemässen Verfahrens eingerichtete Steuereinheit ist insbesondere eine prozessorgestützte Steuereinheit, vorzugsweise ein Mikrocontroller. Der Mikrocontroller MC umfasst einen Speicher. In diesem Speicher können beispielsweise die zuvor beschriebene Datentabellen bzw. mathematischen Funktionen zur Bestimmung des Mischungsverhältnisses eines Gemischs und/oder die zuvor beschriebenen Kompensationswerte für die Bestimmung des Volumenstroms eines Gemischs abgelegt sein. Der Speicher des Mikrocontrollers MC ist vorteilhaft nicht-flüchtig, wie z.B. ein Flash-Speicher. Im Speicher des Mikrocontrollers ist ein Computerprogramm mit Programmroutinen abgelegt oder ladbar, welche durch eine Prozessoreinheit des Mikrocontrollers zur Durchführung der Verfahrensschritte des erfindungsgemässen Verfahrens ausgebildet sind. Der Mikrocontroller kann darüber hinaus spezifische Funktionsblöcke aufweisen, die bereits als Hardware-Funktionseinheiten im Mikrocontroller integriert sind, wie z.B. Analog-/Digital-Umsetzer, Signalprozessoren, digitale Ein-/Ausgabeeinheiten sowie Datenschnittstellen.

Nach einer Ausführungsform umfassen die ersten Mittel einen ersten Temperatursensor und einen zweiten Temperatursensor. Der erste Temperatursensor ist zur Erfassung der Eintrittstemperatur an der Eintrittsposition angeordnet. Der zweite Temperatursensor ist zur Erfassung der Austrittstemperatur an der Austrittsposition angeordnet. Der Temperatursensor kann z.B. ein sogenannten PT 100 oder PT 1000 sein.

Einer weiteren Ausführungsform zufolge sind die vierten Mittel durch den ersten Temperatursensor und/oder durch den zweiten Temperatursensor der ersten Mittel gebildet. Die Steuereinheit ist dazu eingerichtet, die Fluidtemperatur aus der erfassten Eintrittstemperatur und/oder aus der erfassten Austrittstemperatur abzuleiten. Mit anderen Worten kann der erste oder zweite Temperatursensor, der räumlich in der Nähe zum Messabschnitt geordnet ist, als Äquivalent zum Fluidtemperatursensor betrachtet werden. Ein separater Fluidtemperatursensor ist daher nicht erforderlich.

Die Aufgabe der Erfindung wird weiterhin gelöst durch eine Wärmestrommesseinrichtung für die Wärmestrommessung zum Ausführen des erfindungsgemässen Verfahrens. Die Wärmestrommesseinrichtung ist insbesondere ein Wärmeenergiezähler. Eine solche Wärmestrommesseinrichtung weist auf:

- ein Gehäuse,
- einen Leitungsabschnitt, insbesondere ein Messrohr, aufgenommen im Gehäuse,
- einen am Gehäuse angeordneten Ein- und Auslass für den Leitungsabschnitt, wobei das Fluid zum Durchströmen des Messabschnitts innerhalb des Leitungsabschnitt vorgesehen ist,
- einen ersten Temperaturmesseingang zum Anschliessen eines ersten externen Temperatursensors zum Messen einer ersten externen Temperatur, insbesondere einer Vorlauftemperatur, und/oder
- einen zweiten Temperaturmesseingang zum Anschliessen eines zweiten externen Temperatursensors zum Messen einer zweiten externen Temperatur, insbesondere einer Rücklauftemperatur, und/oder
- einen im Gehäuse im Bereich zwischen dem Einlass und dem Auslass angeordneten Fluidtemperatursensor zum Messen einer Fluidtemperatur,
- zweite Mittel zum Messen des Volumenstroms des durch den Messabschnitt strömenden Fluids, und
- dritte Mittel zum Bestimmen der Ultraschalldämpfung durch das Fluid im Messabschnitt.

Die betrachtete Wärmestrommesseinrichtung weist zudem eine Steuereinheit auf, welche mit dem ersten und/oder zweiten Temperaturmesseingang und/oder mit dem Fluidtemperatursensor sowie mit den zweiten und dritten Mitteln verbunden ist. Sie ist dazu eingerichtet bzw. programmiert, aus einer erfassten Temperaturdifferenz, aus dem Volumenstrom, aus der Ultraschalldämpfung und aus der Fluidtemperatur einen Wärmestrom zu bestimmen und einen aktuellen Wert des Wärmestroms und/oder eine daraus abgeleitete Grösse, insbesondere einen Zählerwert einer kumulierten Wärmeenergie, an der Wärmestrommesseinrichtung und/oder an einer Datenschnittstelle der Wärmestrommesseinrichtung auszugeben.

Die Steuereinheit kann zudem dazu eingerichtet sein, die Temperaturdifferenz wahlweise entweder zwischen der gemessenen ersten externen Temperatur und der gemessenen zweiten externen Temperatur zu bestimmen, oder zwischen der gemessenen Fluidtemperatur und der gemessenen zweiten Temperatur zu bestimmen, oder zwischen ersten externen Temperatur und der gemessenen Fluidtemperatur zu bestimmen. Die Auswahl kann z.B. durch eine Benutzereingabe bei der Inbetriebnahme der Wärmestrommesseinrichtung oder automatisch durch die Steuereinheit bei Vorliegen plausibler Temperaturwerte erfolgen.

Nach einer Ausführungsform der Wärmestrommesseinrichtung weisen die zweiten und dritten Mittel zumindest eine Ultraschallmesseinrichtung mit einem ersten und zweiten Ultraschallwandler auf. Der erste Ultraschallwandler ist zum Einstrahlen eines ersten Ultraschallsignals an einem Anfang der Messstrecke und entlang der Messstrecke angeordnet und ausgerichtet. Der zweite Ultraschallwandler ist zum Empfangen des ersten Ultraschallsignals an einem Ende der Messstrecke angeordnet und ausgerichtet. Der zweite Ultraschallwandler ist zum Einstrahlen eines zweiten Ultraschallsignals am Ende der Messstrecke und entlang der Messstrecke in Gegenrichtung angeordnet und ausgerichtet. Der erste Ultraschallwandler ist zum Empfangen des zweiten Ultraschallsignals am Anfang der Messstrecke angeordnet und ausgerichtet. Die Messstrecke verläuft innerhalb des Messabschnitts unter einem spitzen Winkel zur Strömungsrichtung des Fluids oder entgegen dieser. Die Steuereinheit ist signal- und/oder datentechnisch mit dem ersten Ultraschallwandler und mit dem zweiten Ultraschallwandler verbunden. Die Steuereinheit ist dazu eingerichtet bzw. programmiert, den ersten und zweiten Ultraschallwandler abwechselnd zum Einstrahlen und Empfangen eines jeweiligen Ultraschallsignals zur Bestimmung der Strömungsgeschwindigkeit und zur Bestimmung der Ultraschalldämpfung in jeweils zeitlich voneinander unterschiedlichen Messphasen anzusteuern.

Der Vorteil liegt darin, dass mit ein und derselben Ultraschallmesseinrichtung sowohl die Strömungsgeschwindigkeit und auf Basis derer der Volumenstrom als auch die Ultraschalldämpfung und auf Basis derer das Mischungsverhältnis insbesondere eines Wasser-/Glykol-Gemischs bestimmt werden kann.

Der spitze Winkel liegt insbesondere in einem Winkelbereich von $45° \pm 30°$, vorzugsweise bei $45°$. Die Ultraschallmesseinrichtung kann neben der Anordnung aus den beiden Ultraschall-wandlern bzw. Ultraschalltransceivern typischerweise noch elektronische Treiber- und Filterbausteine umfassen.

Nach einer Ausführungsform der vorgenannten Anordnungen für das Messen eines Wärmestroms und der vorgenannten Wärmestrommesseinrichtungen weist die Steuereinheit einen nichtflüchtigen Speicher auf, auf den die Steuereinheit datentechnischen Zugriff hat. Im nichtflüchtigen Speicher ist eine (erste) Datentabelle oder ein (erste) mathematische Funktion zur Bestimmung eines aktuellen Werts des Mischungsverhältnisses R hinterlegt, welche jeweils die Ultraschalldämpfung und die Fluidtemperatur auf das Mischungsverhältnis R insbesondere des Wasser-/Glykol-Gemischs FL abbilden. Alternativ oder zusätzlich ist im nichtflüchtigen Speicher eine (zweite) Datentabelle oder eine (zweite) mathematische Funktion zur Bestimmung eines aktuellen Werts für die Dichte und für die spezifische Wärme hinterlegt, welche jeweils das ermittelte Mischungsverhältnis R und die gemessene Fluidtemperatur auf die zu bestimmende Dichte und spezifischen Wärme insbesondere des Wasser-/Glykol-Gemischs abbilden. Weiter alternativ oder zusätzlich ist im nichtflüchtigen Speicher eine (dritte) Datentabelle oder eine (dritte) mathematische Funktion zur Bestimmung eines aktuellen Kompensationswerts K für die gemessene mittlere Strömungsgeschwindigkeit hinterlegt, welche jeweils die gemessene mittlere Strömungsgeschwindigkeit, die Fluidtemperatur und das Mischungsverhältnis R auf einen Quotienten aus der tatsächlichen mittleren Strömungsgeschwindigkeit zur gemessenen mittleren Strömungsgeschwindigkeit abbilden. Die zuvor beschriebene erste und/oder zweite und/oder dritte Datentabelle wie auch die erste und/oder zweite und/oder dritte mathematische Funktion können auch eine gemeinsame Datentabelle bzw. eine gemeinsame mathematische Funktion bilden.

Die Steuereinheit ist vorzugsweise wieder ein Mikrocontroller, in dessen Speicher die zuvor beschriebenen Datentabellen bzw. mathematischen Funktionen abgelegt sind. Im Speicher des Mikrocontrollers ist ein Computerprogramm mit Programmroutinen abgelegt oder ladbar, welche durch eine Prozessoreinheit des Mikrocontrollers zur Durchführung der Verfahrensschritte des erfindungsgemässen Verfahrens ausgebildet sind.

Die Aufgabe der Erfindung wird durch ein regelbares Durchflussventil, insbesondere durch ein sogenanntes Smart Valve, gelöst. Eine derartiges regelbares Durchflussventil umfasst eine zuvor beschriebene Wärmestrommesseinrichtung. Zudem umfasst das regelbare Durchflussventil eine mittels der Steuereinheit ansteuerbare, vorzugsweise im Gehäuse aufgenommene Ventileinheit zum Einstellen eines durch die Ventileinheit und durch den Messabschnitt hindurchströmenden gleichen Volumenstroms. Das regelbare Durchflussventil ist typischerweise dazu eingerichtet, den Wärmestrom auf eine z.B. über eine Busschnittstelle des regelbaren Durchflussventils empfangenen Sollwert zu regeln. Hierbei können Stellbewegungen an der Ventileinheit erforderlich sein, falls sich z.B. der Druck in den Rohrleitungen und somit auch der Druck im Messabschnitt ändert.

Schliesslich wird die Aufgabe der Erfindung durch ein Computerprogramm mit Programmroutinen zur Durchführung der Verfahrensschritte des erfindungsgemässen Verfahrens durch eine Prozessoreinheit einer als Mikrocontroller ausgebildeten Steuereinheit einer erfindungsgemässen Vorrichtung gelöst, wobei das Computerprogramm in einem Speicher des Mikrocontrollers abgelegt oder ladbar ist.

**EP 3 910 294 B1**

Die Erfindung sowie vorteilhafte Ausführungen der vorliegenden Erfindung werden am Beispiel der nachfolgenden Figuren erläutert. Dabei zeigen:

FIG 1    eine beispielhafte Anordnung für das Messen eines Wärmestroms unter Zuhilfenahme des erfindungsgemässen Verfahrens zum Bestimmen des Mischungsverhältnisses eines Wasser-/Glykol-Gemischs,

FIG 2    ein Beispiel für eine Wärmestrommesseinrichtung als Baueinheit unter Zuhilfenahme des erfindungsgemässen Verfahrens zum Bestimmen des Mischungsverhältnisses eines Wasser-/Glykol-Gemischs, und

FIG 3    ein beispielhaftes Diagramm, welches den Zusammenhang zwischen der Ultraschalldämpfung, der Fluidtemperatur am Beispiel eines Wasser-/Glykol-Gemischs und dem Mischungsverhältnis des Wasser/Glykol-Gemischs zeigt.

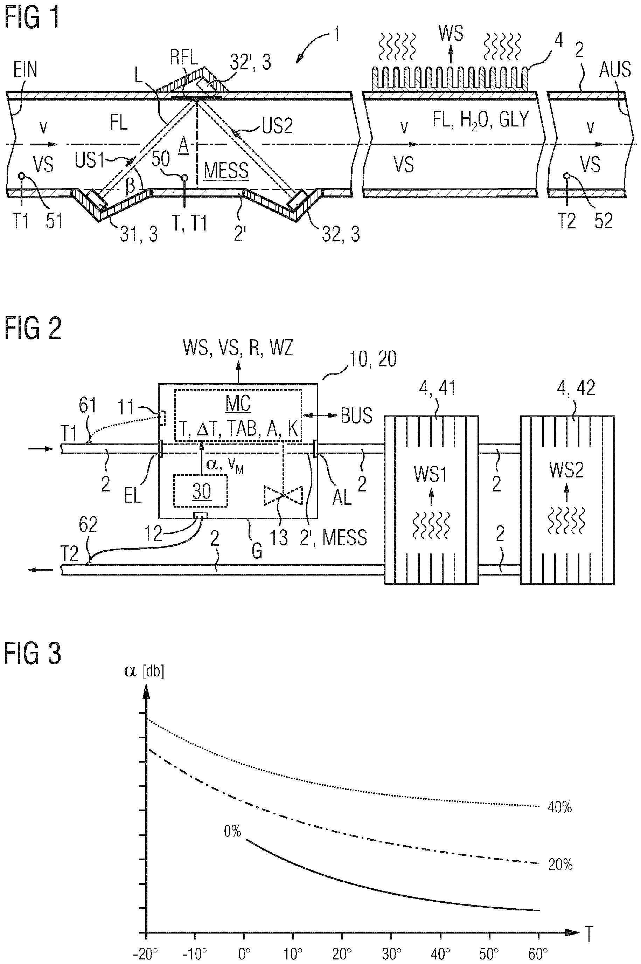

FIG 1 zeigt eine beispielhafte Anordnung 1 für das Messen eines Wärmestroms VS unter Zuhilfenahme des erfindungsgemässen Verfahrens zum Bestimmen des Mischungsverhältnisses eines Wasser-/Glykol-Gemischs FL, $H_2O$, GLY. Mit dem Bezugszeichen 2 ist ein Rohr bzw. Leitungsabschnitt z.B. einer Heizanlage bezeichnet. Mit 2' ist ein als Messrohr dienender Leitungsabschnitt bezeichnet, in dem sich ein Messabschnitt MESS befindet. Im Messabschnitt MESS ist eine Ultraschallmessanordnung 3 mit einem ersten und zweiten Ultraschallwandler 31, 32 angeordnet. Der Messabschnitt MESS erstreckt sich somit zumindest über die beiden Ultraschallwandler 31, 32 hinweg. Die mit Pfeilen gekennzeichnete Strömungsrichtung des im Leitungsabschnitt 2 strömenden Volumenstroms VS verläuft hierbei parallel zur punktgestrichelten (Rohr-)Mitte. Mit dem Bezugszeichen v sind eine mittlere Strömungsgeschwindigkeit des Volumenstroms VS und mit A der Strömungsquerschnitt des Leitungsabschnitts 2 bezeichnet. Im typischen Fall eines Rohrs als Leitungsabschnitt 2 ist der Strömungsquerschnitt ein Kreisquerschnitt. Der Volumenstrom VS ergibt sich dabei rechnerisch aus dem Produkt aus der mittleren Strömungsgeschwindigkeit v und dem Strömungsquerschnitt A. Im linken Teil der FIG 1 ist eine Eintrittsposition EIN für das wärmetransportierende Fluid F und im rechten Teil der FIG 1 eine Austrittsposition AUS zu sehen. Gemäss der eingezeichneten Strömungsrichtung strömt das wärmetransportierende Fluid F durch den Messabschnitt M sowie weiter ohne Zu- und Abfluss durch einen Wärmetauscher 4 unter Abgabe eines Wärmestroms WS und dann weiter zu einer Austrittsposition AUS der Anordnung 1.

Weiterhin ist an der Eintrittsposition EIN ein erster Temperatursensor 51 zur Erfassung einer Eintrittstemperatur T1 des wärmetransportierende Fluids FL angeordnet. Es ist ein zweiter Temperatursensor 52 an der Austrittsposition AUS zur Erfassung einer Austrittstemperatur T2 des wärmetransportierende Fluids FL angeordnet. Schliesslich ist ein Fluidtemperatursensor 50 an einer Position innerhalb des Messabschnitts MESS zur Erfassung einer Fluidtemperatur T des wärmetransportierende Fluids FL angeordnet. Die Temperatursensoren 50, 51, 52 sowie die beiden Ultraschallwandler 31, 32 sind dabei signal- oder datentechnisch mit einer nicht weiter gezeigten Steuereinheit verbunden.

Die beiden gezeigten Ultraschallwandler 31, 32, die auch als Ultraschalltransceiver bezeichnet werden können, sind unter einem spitzen Winkel β von beispielhaft 45° zur Strömungsrichtung und entgegen dieser angeordnet und ausgerichtet. Die beiden Ultraschallwandler 31, 32 können nachträglich als sogenannte Clamp-on-Ultraschallwandler am Leitungsabschnitt 2 bzw. am Rohrleitungsabschnitt angebracht werden. Alternativ dazu können sie nachträglich in Bohrungen in einem Leitungsabschnitt 2 bzw. in einem Rohrleitungsabschnitt eingesetzt werden. Die erfindungsgemässe Anordnung 1 gemäss FIG 1 ist daher besonders für diese nachträgliche Anbringung der Ultraschallwandler 31, 32 geeignet. Weiterhin alternativ dazu können die beiden Ultraschallwandler 31, 32 bereits integrale Bestandteile eines Messrohrs 2' sein, wie z.B. einer Wärmestrommesseinrichtung 10 gemäss FIG 2. Weiterhin können die betrachteten Ultraschallwandler 31, 32 für alle Alternativen auf der gleichen Seite des Messabschnitts MESS angeordnet bzw. eingesetzt sein. In diesem Fall dient eine gegenüberliegende Seite des Messabschnitts MESS, insbesondere eine Innenwandung eines Rohrs 2, als Reflektor RFL. Die beiden Ultraschallwandler 31, 32 sind dabei so zueinander angeordnet und ausgerichtet, dass ein von einem der beiden Ultraschallwandler 31, 32 ausgesendetes Ultraschallsignal US1, US2 entlang des jeweils gestrichelt eingezeichneten akustischen Pfads und weiter nach Reflexion am Reflektor RFL frontal auf den jeweils akustisch gegenüberliegenden Ultraschallwandler 32, 31 auftrifft. Vorzugsweise fluchten die akustischen Pfade der beiden Ultraschallwandler 31, 32 miteinander. Die Länge des akustischen Pfads entspricht dabei der Messstrecke L für das jeweilige Ultraschallsignal US1, US2 zwischen beiden Ultraschallwandlern 31, 32. Mit dem Bezugszeichen 32' ist ein weiterer zweiter Ultraschallwandler als Teil einer alternativen Ultraschallmessanordnung 3 bezeichnet. In diesem Fall liegen sich die beiden Ultraschallwandler 31, 32' direkt gerade gegenüber. Ein jeweils ausgesendetes Ultraschallsignal US1, US2 erreicht dann den jeweils gegenüberliegenden Ultraschallwandler 32, 31 auf akustisch kürzestem Wege und ohne weitere Reflexion an einer Innenseite des Messabschnitts MESS bzw. an einer Rohrinnenwandung.

Die Steuereinheit zu der in der FIG 1 gezeigten erfindungsgemässen Anordnung 1 ist dazu eingerichtet bzw. programmiert, aus der berechneten Temperaturdifferenz ΔT zwischen der erfassten Eintrittstemperatur T1 und der erfassten Austrittstemperatur T2, aus dem messtechnisch erfassten Volumenstrom VS, aus der mittels der Ultraschallmessanordnung 3 erfassten Ultraschalldämpfung sowie aus der Fluidtemperatur T den Wärmestrom WS rechnerisch zu bestimmen. Es kann dann ein Zahlenwert, wie z.B. ein Watt-Wert, für den aktuellen Wärmestrom WS, und/oder durch zeitliche Integration ein zugehöriger ackumulierter Zahlenwert für die transportierte Wärmeenergie, wie z.B. ein kWh-Wert, bestimmt werden und ggf. auf einem mit der Steuereinheit verbundenen Display der Anordnung 1 ausgegeben werden.

Im vorliegenden Beispiel ist die Steuereinheit dazu eingerichtet, den Volumenstrom VS mittels eines Ultraschall-Durchflussmessverfahrens, insbesondere mittels einer Ultraschall-Laufzeitmessung, zu bestimmen. Sie ist zudem dazu eingerichtet, die Bestimmung des Volumenstroms VS und die Bestimmung der Ultraschalldämpfung $\alpha$ in zeitlich voneinander getrennten Messphasen durchzuführen. Hierzu ist die Steuereinheit dazu eingerichtet, die beiden Ultraschallwandler 31, 32 wechselweise zum Aussenden eines ersten Ultraschallsignals US1 und zum Empfangen eines durch das wärmetransportierende Fluid FL gedämpften Ultraschallsignals anzusteuern. Aus den gemessenen Ultraschalldämpfungswerten und Ultraschalllaufzeiten ist dann mittels der Steuereinheit das Mischungsverhältnis R des wärmetransportierenden Fluids FL, insbesondere des Wasser-/Glykol-Gemischs, sowie die mittlere Strömungsgeschwindigkeit für die Berechnung des Volumenstroms VS bestimmbar.

FIG 2 zeigt ein Beispiel für eine Wärmestrommesseinrichtung 10 als Baueinheit unter Zuhilfenahme des erfindungsgemässen Verfahrens zum Bestimmen des Mischungsverhältnisses R eines Wasser-/Glykol-Gemischs. Im Vergleich zur vorherigen erfindungsgemässen räumlich verteilten Anordnung 1 gemäss FIG 1 sind im Beispiel der FIG 2 alle wesentlichen Komponenten EL, AL, 2', 30, MC, 11, 12 für eine Wärmestrommessung in einem Gehäuse G der Wärmestrommesseinrichtung 10 kompakt untergebracht. Die gezeigte Wärmestrommesseinrichtung 10 weist eine am Gehäuse G angeordnete Einlassöffnung EL sowie eine dort angeordnete Auslassöffnung AL zum möglichen Anschluss von Rohren 2 oder Schläuchen z.B. einer Heizanlage auf. Zwischen der Ein- und Auslassöffnung EL, AL ist ohne weiteren Zu- und Abfluss ein Messrohr 2' angeordnet, in welchem der Messabschnitt MESS angeordnet bzw. ausgebildet ist.

Ein wärmetransportierendes Fluid FL strömt im Beispiel der FIG 2 als sogenannter Vorlauf, z.B. von einer Heizungsanlage kommend, von links durch den oberen Leitungsabschnitt 2 durch die Wärmestrommesseinrichtung 10 hindurch und weiter zu zwei Wärmetauschern 41, 42. Mit WS1, WS2 sind die von den beiden Wärmetauschern 41, 42 abgehenden Teilwärmeströme bezeichnet, die in Summe den zu messenden gesamten Wärmestrom WS ergeben. Im unteren Teil der FIG 2 ist der sogenannte Rücklauf ersichtlich. Das abgekühlte wärmetransportierende Fluid FL strömt von rechts nach links wieder zurück zur beispielhaften Heizungsanlage. Der Heizkreislauf ist geschlossen.

Die gezeigte Wärmestrommesseinrichtung 10 weist einen ersten Temperaturmesseingang 11 zum Anschliessen eines ersten externen Temperatursensors 61 zum Messen einer ersten externen Temperatur T1, hier der Vorlauftemperatur, auf. Sie weist zudem einen zweiten Temperaturmesseingang 12 zum Anschliessen eines zweiten externen Temperatursensors 52 zum Messen einer zweiten externen Temperatur T2, hier der Rücklauftemperatur, auf. Die beiden externen Temperatursensoren 61, 62, wie z.B. PT 100, werden vorzugsweise direkt an der Aussenseite der Rohre 2 bzw. Leitungsabschnitt appliziert. Ein oder beide Temperatursensoren 61, 62 können mit ihrer jeweiligen Zuleitung bereits fest mit dem jeweiligen Temperaturmesseingang 11, 12 verbunden sein oder bereits mit ihrer Zuleitung dicht durch das Gehäuse G der Wärmestrommesseinrichtung 10 geführt sein. Im Gehäuse G ist optional ein im Bereich zwischen dem Einlass EL und dem Auslass AL angeordneter Fluidtemperatursensor 50 zum Messen einer Fluidtemperatur T angeordnet.

Weiter ist im Gehäuse G bereits eine Ultraschallmesseinrichtung 30 angeordnet, die zum Messen des Volumenstroms VS des durch den Messabschnitt MESS strömenden Fluids FL sowie zum Bestimmen der Ultraschalldämp-fung $\alpha$ durch das Fluid FL im Messabschnitt MESS eingerichtet ist. In ihrer Funktion entspricht die Ultraschallmesseinrichtung 30 der in der FIG 1 beschriebenen Ultraschallmessanordnung 3 zur Bestimmung des Volumenstroms VS und der Ultraschalldämpfung $\alpha$ in zeitlich voneinander getrennten Messphasen. Ausgabeseitig stellt die Ultraschallmesseinrichtung 30 die gemessene Ultraschalldämpfung $\alpha$ und die gemessene mittlere Strömungsgeschwindigkeit $v_M$ einer als Mikrocontroller ausgebildeten Steuereinheit MC der Wärmestrommesseinrichtung 10 zur messtechnischen Auswertung zur Verfügung.

Die Steuereinheit MC ist nun dazu eingerichtet, aus der Temperaturdifferenz $\Delta T$, vorzugsweise zwischen der gemessenen ersten und zweiten externen Temperatur T1, T2 (Vorlauftemperatur, Rücklauftemperatur), aus dem Volumenstrom VS als Produkt aus dem in der Steuereinheit MC hinterlegten Strömungsquerschnitt A und der mittleren Strömungsgeschwindigkeit $v_M$, aus der Ultraschalldämpfung $\alpha$ und aus der Fluidtemperatur T den Wärmestrom WS zu bestimmen und einen aktuellen Wert des Wärmestroms WS und/oder eine daraus abgeleitete Grösse, insbesondere einen Zählerwert WZ einer kumulierten Wärmeenergie, und/oder ein aktueller Wert für den Volumenstrom VS an der Wärmestrommesseinrichtung 10 z.B. auf einem Display auszugeben. Zusätzlich ist durch die Steuereinheit MC ein Mischungsverhältnis R des wärmetransportierenden Fluids FL, insbesondere des Wasser-/Glykol-Gemischs $H_2O$, GLY, rechnerisch basierend auf der gemessenen Ultraschalldämpfung $\alpha$ und aus der Fluidtemperatur T ermittelbar und z.B. auf dem Display in Form eines Prozentwertes ausgebbar. Die zuvor genannten Werte für den Wärmestrom WS, für den Volumenstrom VS, für das Mischungsverhältnis R sowie für den Zählerwert WZ einer kumulierten Wärmeenergie können auch über eine Schnittstelle BUS der gezeigten Wärmestrommesseinrichtung 10 ausgegeben werden.

Für die rechnerische Ermittlung des Mischungsverhältnisses R dient eine in der Steuereinheit MC bzw. im Mikrocontroller hinterlegte Datentabelle TAB oder mathematische Funktion, welche jeweils die Ultraschalldämpfung $\alpha$ und die Fluidtemperatur T auf das Mischungsverhältnis R, insbesondere des Wasser-/Glykol-Gemischs FL, abbilden.

Zudem dient zur rechnerischen Ermittlung eines aktuellen Werts für die Dichte $\rho$ und für die spezifische Wärme $c_P$ des wärmetransportierenden Fluids FL, insbesondere des Wasser-/Glykol-Gemischs $H_2O$, GLY, die in der Steuereinheit MC hinterlegte Datentabelle TAB oder mathematische Funktion, welche jeweils das ermittelte Mischungsverhältnis R und die gemessene Fluidtemperatur T auf die zu bestimmende Dichte $\rho$ und spezifischen Wärme $c_P$ des wärmetransportierenden Fluids FL, insbesondere des Wasser-/Glykol-Gemischs, abbilden.

Schliesslich dient zur rechnerischen Ermittlung eines aktuellen Werts für einen Kompensationsfaktor K für die gemessene mittlere Strömungsgeschwindigkeit $v_M$ die in der Steuereinheit MC hinterlegte Datentabelle TAB oder mathematische Funktion, welche jeweils die gemessene mittlere Strömungsgeschwindigkeit $v_M$, die Fluidtemperatur T und das Mischungsverhältnis R auf einen Quotienten aus der tatsächlichen mittleren Strömungsgeschwindigkeit v zur gemessenen mittleren Strömungsgeschwindigkeit $v_M$ abbilden.

Im Beispiel der FIG 2 ist zudem ein regelbares Durchflussventil 20 zu sehen, welches neben der Wärmestrommesseinrichtung 10 zusätzlich eine vorzugsweise im Gehäuse G aufgenommene Ventileinheit 13 aufweist. Die Ventileinheit 13 ist ohne Zu- und Abfluss in Serie zum Messabschnitt MESS angeordnet, sodass der gleiche Volumenstrom VS durch den Messabschnitt MESS und durch die Ventileinheit 13 strömt. Alternativ kann die Ventileinheit 13 als separate Baueinheit ausserhalb des Gehäuses G stromabwärts oder stromaufwärts zum Messabschnitt MESS ohne dazwischenliegenden Zu- und Abfluss angeordnet sein. Die Ventileinheit 13 ist mittels der Steuereinheit MC zumindest mittelbar zum Einstellen eines Sollwerts für den Volumenstrom VS ansteuerbar. Das regelbare Durchflussventil 20 ist typischerweise dazu eingerichtet, den Wärmestrom WS auf eine z.B. über die Busschnittstelle BUS des regelbaren Durchflussventils 20 empfangenen Sollwert zu regeln.

FIG 3 zeigt ein beispielhaftes Diagramm, welches den Zusammenhang zwischen der Ultraschalldämpfung, der Fluidtemperatur am Beispiel eines Wasser-/Glykol-Gemischs und dem Mischungsverhältnis des Wasser-/Glykol-Gemischs zeigt. Es ist erkennbar, dass die Ultraschalldämpfung $\alpha$ einerseits mit zunehmendem Mischungsverhältnis R, also mit zunehmender Konzentration des Glykols, am Beispiel von drei Konzentrationswerten von 0 % (reines Wasser), 20 % und 40 % gleichfalls zunimmt. Andererseits ist erkennbar, dass die Ultraschalldämpfung $\alpha$ mit zunehmender Fluidtemperatur T abnimmt. Es wird angemerkt, dass die gezeigten Kennlinien gemäss FIG 3 (hier am Beispiel von (Mono-)Ethylenglykol) sich etwas von denen des Propylenglykols als weiteres gebräuchliches Glykolfrostschutzmittel unterscheiden. Die Auswahl des Glykol-Frostschutzmittels kann z.B. manuell an der Wärmestrommesseinrichtung 10 bzw. am regelbaren Durchflussventil 30 eingegeben werden oder von diesen über die Busschnittstelle BUS eingelesen werden.

Die Steuereinheit MC der Wärmestrommesseinrichtung 10 bzw. des regelbaren Durchflussventils 30 kann auch dazu eingerichtet sein, neben dem Mischungsverhältnis R auch den Typ des verwendeten Glykol-Frostschutzmittels, also (Mono-)Ethylenglykol oder Propylenglykol, zu bestimmen. In diesem Fall erfolgt die Bestimmung aus Basis von frequenzabhängigen Vergleichsdämpfungswerten z.B. aus einer zuvor erfolgten Referenzmessreihe für Wasser-/(Mono-)Ethylenglykol-Gemische und Wasser-/Propylenglykol-Gemische mit verschiedenen Mischungsverhältnissen, bei verschiedenen Fluidtemperaturen und bei eingesetzten verschiedenen Sendefrequenzen für das in den Messabschnitt eingestrahlte Ultraschallsignal. Das Ultraschallsignal kann z.B. bei zwei oder mehr unterschiedlichen Frequenzen in den Messabschnitt eingestrahlt werden, wie z.B. bei 1 MHz, 1.5 MHz oder 2 MHz. Die zuvor beschriebenen Datentabellen oder mathematischen Funktionen können dann um diese zusätzlichen «Sendefrequenzen» erweitert werden. Durch Vergleich der frequenzabhängigen Vergleichsdämpfungswerte mit den Werten der hinterlegten Datentabelle bzw. der mathematischen Funktion ist dann die Bestimmung des auszuwählenden Glykol-Frostschutzmittels möglich.

Bezugszeichenliste

| 1 | Anordnung für das Messen eines Wärmestroms |
|---|---|
| 2 | Leitungsabschnitt, Rohrabschnitt |
| 2' | Messrohr, weiterer Leitungsabschnitt |
| 3 | zweite Mittel, Ultraschallmessanordnung |
| 4, 41, 42 | Wärmetauscher, Heizkörper |
| 10 | Wärmestrommesseinrichtung |
| 11 | erster Temperaturmesseingang |
| 12 | zweiter Temperaturmesseingang |
| 13 | Ventil, einstellbares Ventil |

| 20 | regelbares Durchflussventil, Smart Valve |
| 30 | Ultraschallmesseinrichtung |
| 31 | erster Ultraschallwandler |
| 32, 32' | zweiter Ultraschallwandler |
| 50 | Fluidtemperatursensor |
| 51 | erster Temperatursensor |
| 52 | zweiter Temperatursensor |
| 61 | erster externer Temperatursensor |
| 62 | zweiter externer Temperatursensor |

| A | Strömungsquerschnitt |
| AL | Auslass, Auslassöffnung |
| AUS | Austrittsposition |
| BUS | Busanschluss |
| $C_P$ | spezifische Wärme |
| EIN | Eintrittsposition |
| EL | Einlass, Einlassöffnung |
| FL | Fluid, Gemisch |
| G | Gehäuse |
| GLY | Glykol |
| $H_2O$ | Wasser |
| L | Messstrecke |
| MC | Mikrocontroller |
| MESS | Messabschnitt |
| RFL | Reflektor |
| T | Fluidtemperatur |
| T1 | Eintrittstemperatur |
| T2 | Austrittstemperatur |
| TAB | Datentabelle, elektronische Datentabelle |
| US1 | erstes Ultraschallsignal |
| US2 | zweites Ultraschallsignal |
| v | tatsächliche mittlere Strömungsgeschwindigkeit |
| $v_M$ | messtechnisch ermittelte Strömungsgeschwindigkeit |
| VS | Volumenstrom |
| WS | Wärmestrom |
| WS1, WS2 | Teilwärmestrom |
| WZ | Zählerstand, Wärmezählerstand |
| $\alpha$ | Ultraschalldämpfung |
| $\beta$ | Messwinkel, spitzer Winkel |
| $\rho$ | Dichte |
| $\Delta T$ | Temperaturdifferenz |

**Patentansprüche**

1. Verfahren zum Bestimmen eines von einem wärmetransportierenden Wasser-/Glykol-Gemisch ($H_2O$, GLY) abgehenden Wärmestroms (WS), wobei das Wasser-/Glykol-Gemisch ($H_2O$, GLY) von einer Eintrittsposition (EIN) durch einen mit dem Wasser-/Glykol-Gemisch ($H_2O$, GLY) ausgefüllten Messabschnitt (MESS) zu einer Austrittsposition (AUS) strömt, wobei das Wasser-/Glykol-Gemisch ($H_2O$, GLY) an der Eintrittsposition (EIN) eine Eintrittstemperatur (T1), insbesondere eine Vorlauftemperatur, und an der Austrittsposition (AUS) eine aufgrund des vom Wasser-/Glykol-Gemisch ($H_2O$, GLY) abgehenden Wärmestroms (WS) niedrigere Austrittstemperatur (T2), insbesondere eine Rücklauftemperatur, aufweist, wobei das Verfahren folgende Schritte umfasst:

    - Erfassen einer Temperaturdifferenz ($\Delta T$) zwischen der Ein- und Austrittstemperatur (T1, T2),
    - Messen eines Volumenstroms (VS) des zwischen der Ein- und Austrittsposition (EIN, AUS) strömenden Wasser-/Glykol-Gemischs ($H_2O$, GLY),
    - Bestimmen des Mischungsverhältnisses R des Wasser-/Glykol-Gemischs ($H_2O$, GLY), umfassend folgende Schritte:

- Einstrahlen eines Ultraschallsignals (US1) mit einem - Sendepegel entlang einer Messstrecke (L), wobei die Messstrecke (L) innerhalb des Messabschnitts (MESS) verläuft,
- Messen eines Empfangspegels des Ultraschallsignals (US1) an einem Ende der Messstrecke (L),
- Bestimmen einer Ultraschalldämpfung ($\alpha$) des durch das Wasser-/Glykol-Gemisch ($H_2O$, GLY) gedämpften Ultraschallsignals, insbesondere aus dem Sende- und Empfangspegel des Ultraschallsignals (US1),
- Messen der Fluidtemperatur (T) des durch den Messabschnitt (MESS) hindurchströmenden Wasser-/Glykol-Gemischs ($H_2O$, GLY), und
- Bestimmen des Mischungsverhältnisses R des Wasser-/Glykol-Gemischs ($H_2O$, GLY) aus der bestimmten Ultraschalldämpfung ($\alpha$) und aus der gemessenen Fluidtemperatur (T),

- Bestimmen einer Dichte ($\rho$) und spezifischen Wärme ($c_p$) des wärmetransportierenden Wasser-/Glykol-Gemischs ($H_2O$, GLY) aus der gemessenen Fluidtemperatur (T) und aus dem bestimmten Mischungsverhältnis R des wärmetransportierenden Wasser-/Glykol-Gemischs ($H_2O$, GLY), und
- Bestimmen des vom Wasser-/Glykol-Gemisch ($H_2O$, GLY) ausgehenden Wärmestroms (WS) aus dem Produkt aus dem gemessenem Volumenstrom (VS), aus der gemessenen Temperaturdifferenz ($\Delta T$), aus der bestimmten Dichte ($\rho$) und aus der bestimmten spezifischen Wärme ($c_p$).

2. Verfahren nach Anspruch 1, wobei das Glykol (GLY) des Wasser-/Glykol-Gemischs ($H_2O$, GLY) vorzugsweise aus (Mono-)Ethylenglykol und/oder Propylenglykol besteht.

3. Verfahren nach Anspruch 2, wobei ein aktueller Wert des Mischungsverhältnisses R mittels einer Datentabelle (TAB) oder mathematischen Funktion bestimmt wird, welche jeweils die Ultraschalldämpfung ($\alpha$) und die Fluidtemperatur (T) auf das Mischungsverhältnis R des Wasser-/Glykol-Gemischs (FL) abbilden.

4. Verfahren nach einem der vorherigen Ansprüche,

- wobei zwischen Anfang und Ende der Messstrecke (L) ein erstes Ultraschallsignal (US1) entlang der Messstrecke (L) und ein zweites Ultraschallsignal (US2) in Gegenrichtung entlang der Messstrecke (L) eingestrahlt wird,
- wobei aus dem jeweiligen Sende- und Empfangspegel der beiden Ultraschallsignale (US1, US2) eine erste und zweite Ultraschalldämpfung bestimmt wird, und
- wobei die Ultraschalldämpfung ($\alpha$) aus dem Mittelwert der ersten und zweiten Ultraschalldämpfung bestimmt wird.

5. Verfahren nach einem der vorherigen Ansprüche, wobei der Volumenstrom (VS) mittels eines Ultraschall-Durchflussmessverfahrens bestimmt wird und wobei die Bestimmung des Volumenstroms (VS) sowie die Bestimmung der Ultraschalldämpfung (a) in zeitlich voneinander getrennten Messphasen erfolgt.

6. Verfahren nach einem der vorherigen Ansprüche, wobei ein aktueller Wert für die Dichte ($\rho$) und für die spezifische Wärme ($c_P$) des wärmetransportierenden Wasser-/Glykol-Gemischs ($H_2O$, GLY) mittels einer Datentabelle (TAB) oder einer mathematische Funktion bestimmt wird, welche jeweils das ermittelte Mischungsverhältnis R und die gemessene Fluidtemperatur (T) auf die zu bestimmende Dichte ($\rho$) und spezifischen Wärme ($c_P$) des wärmetransportierenden Wasser-/Glykol-Gemisch ($H_2O$, GLY) abbilden.

7. Verfahren nach einem der vorherigen Ansprüche,

- wobei mittels eines Ultraschall-Laufzeitdifferenzverfahrens die Strömungsgeschwindigkeit ($v_M$) des durch einen vorgegebenen Strömungsquerschnitt (A) des Messabschnitts (MESS) hindurchströmenden Wasser-/Glykol-Gemischs ($H_2O$, GLY) gemessen wird,
- wobei ein Kompensationsfaktor (K) für die gemessene mittlere Strömungsgeschwindigkeit ($v_M$) aus der gemessenen Fluidtemperatur (T) und aus dem bestimmten Mischungsverhältnis R des wärmetransportierenden Wasser-/Glykol-Gemischs ($H_2O$, GLY) bestimmt wird, und
- wobei der Volumenstrom (VS) aus dem Produkt aus dem Strömungsmessquerschnitt (A), aus der gemessenen Strömungsgeschwindigkeit ($v_M$) und aus dem Kompensationsfaktor (K) ermittelt wird.

8. Verfahren nach Anspruch 7, wobei ein aktueller Kompensationswert K für die gemessene mittlere Strömungsgeschwindigkeit (vM) mittels einer Datentabelle (TAB) oder mathematischen Funktion bestimmt wird, welche jeweils die gemessene mittlere Strömungsgeschwindigkeit (vM), die Fluidtemperatur (T) und das Mischungsverhältnis R auf einen Quotienten aus der tatsächlichen mittleren Strömungsgeschwindigkeit (v) zur gemessenen mittleren Strömungsgeschwindigkeit (vM) abbilden.

9. Anordnung (1) für das Messen eines Wärmestroms (WS) zum Ausführen des Verfahrens nach einem der vorherigen Ansprüche 1 bis 8, die Anordnung aufweisend

- erste Mittel (51, 52) zum Erfassen einer Temperaturdifferenz (ΔT) zwischen einer Eintrittstemperatur (T1) und einer Austrittstemperatur (T1, T2), insbesondere zwischen einer Vor- und Rücklauftemperatur,
- zweite Mittel (31, 32) zum Messen eines Volumenstroms (VS) des durch den Messabschnitt (MESS) strömenden Wasser-/Glykol-Gemischs ($H_2O$, GLY),
- dritte Mittel (31, 32) zum Bestimmen der Ultraschalldämpfung (α) durch das Wasser-/Glykol-Gemisch ($H_2O$, GLY) im Messabschnitt (MESS),
- vierte Mittel (50) zum Erfassen der Fluidtemperatur (T) des durch den Messabschnitt (MESS) strömenden Wasser-/Glykol-Gemischs ($H_2O$, GLY), und
- eine Steuereinheit (MC), welche mit den ersten, zweiten, dritten und vierten Mitteln (31, 32, 51, 52, 50) verbunden ist und welche dazu eingerichtet ist, aus der Temperaturdifferenz (ΔT), aus dem Volumenstrom (VS), aus der Ultraschalldämpfung (α) und aus der Fluidtemperatur (T) den Wärmestrom (WS) zu bestimmen und ggf. auszugeben.

10. Anordnung (1) nach Anspruch 9, wobei die ersten Mittel (51, 52) einen ersten Temperatursensor (51) und einen zweiten Temperatursensor (52) umfassen, und wobei der erste Temperatursensor (51) zur Erfassung der Eintrittstemperatur (T1) an der Eintrittsposition (EIN) und der zweite Temperatursensor (52) zur Erfassung der Austrittstemperatur (T2) an der Austrittsposition (AUS) angeordnet ist.

11. Anordnung (1) nach Anspruch 10, wobei die vierten Mittel (50) durch den ersten Temperatursensor (51) und/oder durch den zweiten Temperatursensor (52) der ersten Mittel (51, 52) gebildet sind, und wobei die Steuereinheit (MC) dazu eingerichtet ist, die Fluidtemperatur (T) aus der erfassten Eintrittstemperatur (T1) und/oder aus der erfassten Austrittstemperatur (T2) abzuleiten.

12. Wärmestrommesseinrichtung (10) für die Wärmestrommessung, insbesondere Wärmeenergiezähler, zum Ausführen des Verfahrens nach einem der vorherigen Ansprüche 1 bis 8, aufweisend

- ein Gehäuse (G),
- einen Leitungsabschnitt (2'), insbesondere ein Messrohr, aufgenommen im Gehäuse (G),
- einen am Gehäuse (G) angeordneten Ein- und Auslass (EL, AL) für den Leitungsabschnitt (2'), wobei das Wasser-/Glykol-Gemisch ($H_2O$, GLY) zum Durchströmen des Messabschnitts (MESS) innerhalb des Leitungsabschnitt (2) vorgesehen ist,
- einen ersten Temperaturmesseingang (11) zum Anschliessen eines ersten externen Temperatursensors (61) zum Messen einer ersten externen Temperatur (T1), insbesondere einer Vorlauftemperatur, und/oder
- einen zweiten Temperaturmesseingang (12) zum Anschliessen eines zweiten externen Temperatursensors (52) zum Messen einer zweiten externen Temperatur (T2), insbesondere einer Rücklauftemperatur, und/oder
- einen im Gehäuse (G) im Bereich zwischen dem Einlass (EL) und dem Auslass (AL) angeordneten Fluidtemperatursensor (50) zum Messen einer Fluidtemperatur (T),
- zweite Mittel (31, 32) zum Messen des Volumenstroms (VS) des durch den Messabschnitt (MESS) strömenden Wasser-/Glykol-Gemischs ($H_2O$, GLY),
- dritte Mittel (51, 52) zum Bestimmen der Ultraschalldämpfung (α) durch das Wasser-/Glykol-Gemisch ($H_2O$, GLY) im Messabschnitt (MESS), und
- eine Steuereinheit (MC), welche mit dem ersten und/oder zweiten Temperaturmesseingang (11, 12) und/oder mit dem Fluidtemperatursensor (50) sowie mit den zweiten und dritten Mitteln (31, 32, 51, 52) verbunden ist und welche dazu eingerichtet ist, aus einer Temperaturdifferenz (ΔT) wahlweise zwischen der ersten und zweiten externen Temperatur (T1, T2), oder zwischen der Fluidtemperatur (T) und der zweiten externen Temperatur (T2), oder zwischen der ersten externen Temperatur (T1) und der Fluidtemperatur (T), sowie aus dem Volumenstrom (VS), aus der Ultraschalldämpfung (α) und aus der Fluidtemperatur (T) einen Wärmestrom (WS) zu bestimmen und einen aktuellen Wert des Wärmestroms (WS) und/oder eine daraus abgeleitete Grösse, insbesondere einen Zählerwert einer kumulierten Wärmeenergie, an der Wärmestrommesseinrichtung (10) und/oder an einer Datenschnittstelle (BUS) der Wärmestrommesseinrichtung (10) auszugeben.

13. Vorrichtung nach einem der Ansprüche 9 bis 12,

- wobei die zweiten und dritten Mittel (31, 32) zumindest eine Ultraschallmessanordnung (30) mit einem ersten und zweiten Ultraschallwandler (31, 32) aufweisen,
- wobei der erste Ultraschallwandler (31) zum Einstrahlen eines ersten Ultraschallsignals (US1) an einem Anfang der Messstrecke (L) und entlang dieser (L) angeordnet und ausgerichtet ist, wobei der zweite Ultraschallwandler (32) zum Empfangen des ersten Ultraschallsignals (US1) an einem Ende der Messstrecke (L) angeordnet und ausgerichtet ist, und/oder
- wobei der zweite Ultraschallwandler (31) zum Einstrahlen eines zweiten Ultraschallsignals (US2) am Ende der Messstrecke (L) und entlang dieser (L) in Gegenrichtung angeordnet und ausgerichtet ist, wobei der erste Ultraschallwandler (31) zum Empfangen des zweiten Ultraschallsignals (US2) am Anfang der Messstrecke (L) angeordnet und ausgerichtet ist,
- wobei die Messstrecke (L) innerhalb des Messabschnitts (MESS) unter einem spitzen Winkel ($\beta$) zur Strömungsrichtung des Wasser-/Glykol-Gemischs ($H_2O$, GLY) oder entgegen dieser verläuft,
- wobei die Steuereinheit (MC) signal- und/oder datentechnisch mit dem ersten Ultraschallwandler (31) und mit dem zweiten Ultraschallwandler (32) verbunden ist, und
- wobei die Steuereinheit (MC) dazu eingerichtet ist, den ersten und zweiten Ultraschallwandler (31, 32) abwechselnd zum Einstrahlen und Empfangen eines jeweiligen Ultraschallsignals (US1, US2) zur Bestimmung der mittleren Strömungsgeschwindigkeit ($v_M$) und zur Bestimmung der Ultraschalldämpfung ($\alpha$) in jeweils zeitlich voneinander unterschiedlichen Messphasen anzusteuern.

**14.** Vorrichtung nach einem der vorherigen Ansprüche 9 bis 13, wobei die Steuereinheit (MC) einen nichtflüchtigen Speicher aufweist, auf den die Steuereinheit (MC) datentechnischen Zugriff hat, und

- wobei im nichtflüchtigen Speicher eine Datentabelle (TAB) oder eine mathematische Funktion zur Bestimmung eines aktuellen Werts des Mischungsverhältnisses R hinterlegt ist, welche jeweils die Ultraschalldämpfung ($\alpha$) und die Fluidtemperatur (T) auf das Mischungsverhältnis R des Wasser-/Glykol-Gemischs (FL) abbilden, und/oder
- wobei im nichtflüchtigen Speicher eine Datentabelle (TAB) oder eine mathematische Funktion zur Bestimmung eines aktuellen Werts für die Dichte ($\rho$) und für die spezifische Wärme ($c_P$) hinterlegt ist, welche jeweils das ermittelte Mischungsverhältnis R und die gemessene Fluidtemperatur (T) auf die zu bestimmende Dichte ($\rho$) und spezifischen Wärme ($c_P$) des Wasser-/Glykol-Gemischs (FL) abbilden, und/oder
- wobei im nichtflüchtigen Speicher eine Datentabelle oder eine mathematische Funktion zur Bestimmung eines aktuellen Kompensationswerts K für die gemessene mittlere Strömungsgeschwindigkeit ($v_M$) hinterlegt ist, welche jeweils die gemessene mittlere Strömungsgeschwindigkeit ($v_M$), die Fluidtemperatur (T) und das Mischungsverhältnis R auf einen Quotienten aus der tatsächlichen mittleren Strömungsgeschwindigkeit (v) zur gemessenen mittleren Strömungsgeschwindigkeit ($v_M$) abbilden.

**15.** Regelbares Durchflussventil (20), insbesondere Smart Valve, mit einer Wärmestrommesseinrichtung (10) nach einem der vorherigen Ansprüche 12 bis 14, mit einer mittels der Steuereinheit (MC) ansteuerbaren, vorzugsweise im Gehäuse (G) aufgenommenen Ventileinheit (13) zum Einstellen eines durch die Ventileinheit (13) und durch den Messabschnitt (MESS) hindurchfliessenden gleichen Volumenstroms (VS).

**16.** Computerprogramm mit Programmroutinen zur Durchführung der Verfahrensschritte des Verfahrens nach einem der Ansprüche 1 bis 8 durch eine Prozessoreinheit einer als Mikrocontroller ausgebildeten Steuereinheit (MC) einer Vorrichtung (1, 10, 20) nach einem der vorherigen Ansprüche 9 bis 15, wobei das Computerprogramm in einem Speicher des Mikrocontrollers (MC) abgelegt oder ladbar ist.

**Claims**

**1.** Method for determining a heat flow (WS) emanating from by a heat-conveying water/glycol mixture (H2O, GLY), wherein the water/glycol mixture ($H_2O$, GLY) flows from an input position (EIN) through a measuring section (MESS) filled with the water/glycol mixture ($H_2O$, GLY) to an outlet position (AUS), wherein the water/glycol mixture ($H_2O$, GLY) at the input position (EIN) has an input temperature (T1), in particular an inlet flow temperature, and at the outlet position (AUS) has an outlet temperature (T2) that is lower owing to the heat flow (WS) emanating from by the water/glycol mixture ($H_2O$, GLY), in particular a return flow temperature, wherein the method comprises the following steps:

- detecting a temperature difference ($\Delta T$) between the input and outlet temperatures (T1, T2),

- measuring a volume flow (VS) of the water/glycol mixture ($H_2O$, GLY) flowing between the inlet and outlet positions (EIN, AUS),
- determining the mixing ratio R of the water/glycol mixture ($H_2O$, GLY), comprising the following steps:

- irradiating an ultrasonic signal (US1) with a transmission level along a measured distance (L), wherein the measured distance (L) runs inside the measuring section (MESS),
- measuring a receiving level of the ultrasonic signal (US1) at one end of the measured distance (L),
- determining an ultrasonic attenuation ($\alpha$) of the ultrasonic signal attenuated by the water/glycol mixture ($H_2O$, GLY), in particular from the transmission and receiving levels of the ultrasonic signal (US1),
- measuring the fluid temperature (T) of the water/glycol mixture ($H_2O$, GLY) flowing through the measuring section (MESS), and
- determining the mixing ratio R of the water/glycol mixture ($H_2O$, GLY) from the determined ultrasonic attenuation ($\alpha$) and from the measured fluid temperature (T),

- determining a density ($\rho$) and specific heat ($c_p$) of the heat-conveying water/glycol mixture ($H_2O$, GLY) from the measured fluid temperature (T) and from the determined mixing ratio R of the heat-conveying water/glycol mixture ($H_2O$, GLY), and
- determining the heat flow (WS) emanating from the water/glycol mixture ($H_2O$, GLY) from the product of the measured volume flow (VS), from the measured temperature difference ($\Delta T$), from the determined density ($\rho$) and from the determined specific heat ($c_p$).

2. Method according to claim 1, wherein the glycol (GLY) of the water/glycol mixture ($H_2O$, GLY) preferably consists of (mono-)ethylene glycol and/or propylene glycol.

3. Method according to claim 2, wherein a current value of the mixing ratio R is determined by means of a data table (TAB) or mathematical function, which in each case map the ultrasonic attenuation ($\alpha$) and the fluid temperature (T) onto the mixing ratio R of the water/glycol mixture (FL).

4. Method according to one of the preceding claims,

- wherein between start and end of the measured distance (L) a first ultrasonic signal (US1) is irradiated along the measured distance (L) and a second ultrasonic signal (US2) in the opposite direction along the measured distance (L),
- wherein a first and a second ultrasonic attenuation is determined from the respective transmission and receiving levels of the two ultrasonic signals (US1, US2), and
- wherein the ultrasonic attenuation ($\alpha$) is determined from the mean of the first and second ultrasonic attenuation.

5. Method according to one of the preceding claims, wherein the volume flow (VS) is determined by means of an ultrasonic flow measuring method and wherein the determination of the volume flow (VS) and the determination of the ultrasonic attenuation ($\alpha$) takes place in measuring phases at separate times.

6. Method according to one of the preceding claims, wherein a current value for the density ($\rho$) and for the specific heat ($c_P$) of the heat-conveying water/glycol mixture ($H_2O$, GLY) is determined by means of a data table (TAB) or a mathematical function, which in each case map the calculated mixing ratio R and the measured fluid temperature (T) onto the density ($\rho$) and specific heat ($c_P$) to be determined of the heat-conveying water/glycol mixture ($H_2O$, GLY).

7. Method according to one of the preceding claims,

- wherein the flow speed ($v_M$) of the water/glycol mixture ($H_2O$, GLY) flowing through a specified flow cross-section (A) of the measuring section (MESS) is measured by means of an ultrasonic runtime differential method,
- wherein a compensation factor (K) for the measured mean flow speed ($v_M$) is determined from the measured fluid temperature (T) and from the determined mixing ratio R of the heat-conveying water/glycol mixture ($H_2O$, GLY), and
- wherein the volume flow (VS) is calculated from the product of the flow cross-section (A), from the measured flow speed ($v_M$) and from the compensation factor (K).

8. Method according to claim 7, wherein a current compensation value K is determined for the measured mean flow speed ($v_M$) by means of a data table (TAB) or mathematical function, which in each case map the measured mean flow speed ($v_M$), the fluid temperature (T) and the mixing ratio R onto a quotient of the actual mean flow speed (v) to the measured mean flow speed ($V_M$).

9. Arrangement (1) for measuring a heat flow (WS) for carrying out the method according to one of the preceding claims 1 to 8, the arrangement having

   - first means (51, 52) for detecting a temperature difference ($\Delta T$) between an input temperature (T1) and an outlet temperature (T1, T2), in particular between an inlet flow temperature and a return flow temperature,
   - second means (31, 32) for measuring a volume flow (VS) of the water/glycol mixture ($H_2O$, GLY) flowing through the measuring section (MESS),
   - third means (31, 32) for determining the ultrasonic attenuation ($\alpha$) through the water/glycol mixture ($H_2O$, GLY) in the measuring section (MESS),
   - fourth means (50) for detecting the fluid temperature (T) of the water/glycol mixture ($H_2O$, GLY) flowing through the measuring section (MESS), and
   - a control unit (MC), which is connected to the first, second, third and fourth means (31, 32, 51, 52, 50) and which is adapted to determine the heat flow (WS) from the temperature difference ($\Delta T$), from the volume flow (VS), from the ultrasonic attenuation ($\alpha$) and from the fluid temperature (T) and to optionally output it.

10. Arrangement (1) according to claim 9, wherein the first means (51, 52) comprise a first temperature sensor (51) and a second temperature sensor (52), and wherein the first temperature sensor (51) is arranged at the input position (EIN) for detection of the input temperature (T1) and the second temperature sensor (52) is arranged at the outlet position (AUS) for detection of the outlet temperature (T2).

11. Arrangement (1) according to claim 10, wherein the fourth means (50) are formed by the first temperature sensor (51) and/or by the second temperature sensor (52) of the first means (51, 52), and wherein the control unit (MC) is adapted to derive the fluid temperature (T) from the detected input temperature (T1) and/or from the detected outlet temperature (T2) .

12. Heat flow measuring device (10) for heat flow measurement, in particular thermal energy counter, for carrying out the method according to one of the preceding claims 1 to 8, having

   - a housing (G),
   - a line section (2'), in particular a measuring pipe, received in the housing (G),
   - an inlet and outlet (EL, AL) arranged on the housing (G) for the line section (2'), wherein the water/glycol mixture ($H_2O$, GLY) is provided for flowing through the measuring section (MESS) inside the line section (2),
   - a first temperature measurement input (11) for connecting a first external temperature sensor (61) for measuring a first external temperature (T1), in particular an inlet flow temperature, and/or
   - a second temperature measurement input (12) for connecting a second external temperature sensor (52) for measuring a second external temperature (T2), in particular a return flow temperature, and/or
   - a fluid temperature sensor (50) arranged in the housing (G) in the region between the inlet (EL) and the outlet (AL) for measuring a fluid temperature (T),
   - second means (31, 32) for measuring the volume flow (VS) of the water/glycol mixture ($H_2O$, GLY) flowing through the measuring section (MESS),
   - third means (51, 52) for determining the ultrasonic attenuation ($\alpha$) by the water/glycol mixture ($H_2O$, GLY) in the measuring section (MESS), and
   - a control unit (MC), which is connected to the first and/or second temperature measurement input (11, 12) and/or to the fluid temperature sensor (50) and to the second and third means (31, 32, 51, 52) and which is adapted to determine a heat flow (WS) from a temperature difference ($\Delta T$) optionally between the first and second external temperature (T1, T2), or between the fluid temperature (T) and the second external temperature (T2), or between the first external temperature (T1) and the fluid temperature (T), and from the volume flow (VS), from the ultrasonic attenuation ($\alpha$) and from the fluid temperature (T) and to output a current value of the heat flow (WS) and/or a variable derived therefrom, in particular a counter value of a cumulative thermal energy, at the heat flow measuring device (10) and/or at a data interface (BUS) of the heat flow measuring device (10).

13. Device according to one of claims 9 to 12,

   - wherein the second and third means (31, 32) have at least one ultrasonic measuring arrangement (30) with a first and second ultrasonic transducer (31, 32),

- wherein the first ultrasonic transducer (31) is arranged and oriented at a start of the measured distance (L) and along it (L) for irradiating a first ultrasonic signal (US1), wherein the second ultrasonic transducer (32) is arranged and oriented at an end of the measured distance (L) for receiving the first ultrasonic signal (US1), and/or
- wherein the second ultrasonic transducer (31) is arranged and oriented in the opposite direction at the end of the measured distance (L) and along it (L) for irradiating a second ultrasonic signal (US2), wherein the first ultrasonic transducer (31) is arranged and oriented at the start of the measured distance (L) for receiving the second ultrasonic signal (US2),
- wherein the measured distance (L) inside the measuring section (MESS) runs at an acute angle ($\beta$) to the flow direction of the water/glycol mixture ($H_2O$, GLY) or counter thereto,
- wherein the control unit (MC) is connected in terms of signalling and/or data to the first ultrasonic transducer (31) and to the second ultrasonic transducer (32), and
- wherein the control unit (MC) is adapted to actuate the first and second ultrasonic transducers (31, 32) alternately for irradiating and receiving a respective ultrasonic signal (US1, US2) for determination of the mean flow speed ($v_M$) and for determination of the ultrasonic attenuation ($\alpha$) in measuring phases at separate times in each case.

14. Device according to one of the preceding claims 9 to 13, wherein the control unit (MC) has a non-volatile memory, to which the control unit (MC) has access in terms of data, and

- wherein a data table (TAB) or a mathematical function for determination of a current value of the mixing ratio R is stored in the non-volatile memory, which in each case map the ultrasonic attenuation ($\alpha$) and the fluid temperature (T) onto the mixing ratio R in particular of the water/glycol mixture (FL), and/or
- wherein a data table (TAB) or a mathematical function for determination of a current value for the density ($\rho$) and for the specific heat ($c_P$) is stored in the non-volatile memory, which in each case map the calculated mixing ratio R and the measured fluid temperature (T) onto the density ($\rho$) and specific heat ($c_P$) to be determined in particular of the water/glycol mixture (FL), and/or
- wherein a data table or a mathematical function for determination of a current compensation value K for the measured mean flow speed ($v_M$) is stored in the non-volatile memory, which in each case map the measured mean flow speed ($v_M$), the fluid temperature (T) and the mixing ratio R onto a quotient of the actual mean flow speed (v) to the measured mean flow speed ($v_M$).

15. Adjustable flow valve (20), in particular Smart Valve, with a heat flow measuring device (10) according to one of the preceding claims 12 to 14, with a valve unit (13), preferably received in the housing (G), which can be actuated by means of the control unit (MC) for setting an equal volume flow (VS) flowing through the valve unit (13) and through the measuring section (MESS).

16. Computer program with program routines for carrying out the method steps of the method according to one of claims 1 to 8 by way of a processor unit of a control unit (MC), designed as a microcontroller, of a device (1, 10, 20) according to one of the preceding claims 9 to 15, wherein the computer program is stored or can be loaded in a memory of the microcontroller (MC) .

**Revendications**

1. Procédé pour la détermination d'un flux de chaleur (WS) émanant d'un mélange d'eau et de glycol ($H_2O$, GLY) caloporteur, dans lequel le mélange d'eau et de glycol ($H_2O$, GLY) s'écoule depuis une position d'entrée (EIN) à travers une section de mesure (MESS) remplie du mélange d'eau et de glycol ($H_2O$, GLY) jusqu'à une position de sortie (AUS), dans lequel le mélange d'eau et de glycol ($H_2O$, GLY) présente au niveau de la position d'entrée (EIN) une température d'entrée (T1), en particulier une température de départ, et au niveau de la position de sortie (AUS) une température de sortie (T2), en particulier une température de retour, inférieure en raison du flux de chaleur (WS) émanant du mélange d'eau et de glycol ($H_2O$, GLY), le procédé comportant les étapes suivantes :

- détection d'une différence de température ($\Delta T$) entre la température d'entrée et la température de sortie (T1, T2),
- mesure d'un flux volumique (VS) du mélange d'eau et de glycol ($H_2O$, GLY) s'écoulant entre la position d'entrée et la position de sortie (EIN, AUS),
- détermination du rapport de mélange R du mélange d'eau et de glycol ($H_2O$, GLY), comportant les étapes suivantes :

  - émission d'un signal ultrasonore (US1) avec un niveau d'émission le long d'un tronçon de mesure (L),

dans lequel le tronçon de mesure (L) s'étend à l'intérieur de la section de mesure (MESS),
- mesure d'un niveau de réception du signal ultrasonore (US1) au niveau d'une extrémité du tronçon de mesure (L),
- détermination d'une atténuation ultrasonore ($\alpha$) du signal ultrasonore atténué par le mélange d'eau et de glycol ($H_2O$, GLY), en particulier à partir du niveau d'émission et du niveau de réception du signal ultrasonore (US1),

- mesure de la température de fluide (T) du mélange d'eau et de glycol ($H_2O$, GLY) traversant la section de mesure (MESS), et
- détermination du rapport de mélange R du mélange d'eau et de glycol ($H_2O$, GLY) à partir de l'atténuation ultrasonore ($\alpha$) déterminée et à partir de la température de fluide (T) mesurée,
- détermination d'une densité ($\rho$) et d'une chaleur spécifique ($c_p$) du mélange d'eau et de glycol ($H_2O$, GLY) caloporteur à partir de la température de fluide (T) mesurée et à partir du rapport de mélange R déterminé du mélange d'eau et de glycol ($H_2O$, GLY) caloporteur, et
- détermination du flux de chaleur (WS) émanant du mélange d'eau et de glycol ($H_2O$, GLY) à partir du produit du flux volumique (VS) mesuré, à partir de la différence de température ($\Delta T$) mesurée, à partir de la densité ($\rho$) déterminée et à partir de la chaleur spécifique ($c_p$) déterminée.

2. Procédé selon la revendication 1, dans lequel le glycol (GLY) du mélange d'eau et de glycol ($H_2O$, GLY) est de préférence constitué de (mono)éthylène glycol et/ou de propylène glycol.

3. Procédé selon la revendication 2, dans lequel une valeur actuelle du rapport de mélange R est déterminée au moyen d'un tableau de données (TAB) ou d'une fonction mathématique qui mappe respectivement l'atténuation ultrasonore ($\alpha$) et la température de fluide (T) sur le rapport de mélange R du mélange d'eau et de glycol (FL).

4. Procédé selon l'une des revendications précédentes,

- dans lequel, entre le début et l'extrémité du tronçon de mesure (L), un premier signal ultrasonore (US1) est émis le long du tronçon de mesure (L) et un deuxième signal ultrasonore (US2) est émis dans le sens contraire le long du tronçon de mesure (L),
- dans lequel des première et deuxième atténuations ultrasonores sont déterminées à partir du niveau d'émission et du niveau de réception respectifs des deux signaux ultrasonores (US1, US2), et
- dans lequel l'atténuation ultrasonore ($\alpha$) est déterminée à partir de la valeur moyenne des première et deuxième atténuations ultrasonores.

5. Procédé selon l'une des revendications précédentes, dans lequel le flux volumique (VS) est déterminé au moyen d'un procédé de mesure de débit ultrasonore et dans lequel la détermination du flux volumique (VS) ainsi que la détermination de l'atténuation ultrasonore (a) s'effectuent dans des phases de mesure séparées l'une de l'autre dans le temps.

6. Procédé selon l'une des revendications précédentes, dans lequel une valeur actuelle pour la densité ($\rho$) et pour la chaleur spécifique ($c_p$) du mélange d'eau et de glycol ($H_2O$, GLY) caloporteur est déterminée au moyen d'un tableau de données (TAB) ou d'une fonction mathématique qui mappe respectivement le rapport de mélange R établi et la température de fluide (T) mesurée sur la densité ($\rho$) à déterminer et la chaleur spécifique ($c_p$) à déterminer du mélange d'eau et de glycol ($H_2O$, GLY) caloporteur.

7. Procédé selon l'une des revendications précédentes,

- dans lequel la vitesse d'écoulement ($v_M$) du mélange d'eau et de glycol ($H_2O$, GLY) traversant une section transversale d'écoulement (A) prédéfinie de la section de mesure (MESS) est mesurée au moyen d'un procédé par différence de temps de propagation ultrasonore,
- dans lequel un facteur de compensation (K) pour la vitesse d'écoulement moyenne mesurée ($v_M$) est déterminé à partir de la température de fluide (T) mesurée et à partir du rapport de mélange R déterminé du mélange d'eau et de glycol ($H_2O$, GLY) caloporteur, et
- dans lequel le flux volumique (VS) est établi à partir du produit de la section transversale de mesure d'écoulement (A), à partir de la vitesse d'écoulement mesurée ($v_M$) et à partir du facteur de compensation (K).

8. Procédé selon la revendication 7, dans lequel une valeur de compensation K actuelle pour la vitesse d'écoulement moyenne mesurée (vM) est déterminée au moyen d'un tableau de données (TAB) ou d'une fonction mathématique qui mappe respectivement la vitesse d'écoulement moyenne mesurée (vM), la température de fluide (T) et le rapport de mélange R sur un quotient de la vitesse d'écoulement moyenne effective (v) et de la vitesse d'écoulement moyenne mesurée (vM).

9. Agencement (1) pour la mesure d'un flux de chaleur (WS) pour la mise en oeuvre du procédé selon l'une des revendications précédentes 1 à 8, l'agencement comprenant

   - de premiers moyens (51, 52) pour la détection d'une différence de température ($\Delta$T) entre une température d'entrée (T1) et une température de sortie (T1, T2), en particulier entre une température de départ et une température de retour,
   - de deuxièmes moyens (31, 32) pour la mesure d'un flux volumique (VS) du mélange d'eau et de glycol ($H_2O$, GLY) s'écoulant à travers la section de mesure (MESS),
   - de troisièmes moyens (31, 32) pour la détermination de l'atténuation ultrasonore ($\alpha$) à travers le mélange d'eau et de glycol ($H_2O$, GLY) dans la section de mesure (MESS),
   - de quatrièmes moyens (50) pour la détection de la température de fluide (T) du mélange d'eau et de glycol ($H_2O$, GLY) s'écoulant à travers la section de mesure (MESS), et
   - une unité de commande (MC), laquelle est reliée aux premiers, deuxièmes, troisièmes et quatrièmes moyens (31, 32, 51, 52, 50) et laquelle est conçue pour déterminer et si nécessaire délivrer le flux de chaleur (WS) à partir de la différence de température ($\Delta$T), à partir du flux volumique (VS), à partir de l'atténuation ultrasonore ($\alpha$) et à partir de la température de fluide (T).

10. Agencement (1) selon la revendication 9, dans lequel les premiers moyens (51, 52) comportent un premier capteur de température (51) et un deuxième capteur de température (52), et dans lequel le premier capteur de température (51) pour la détection de la température d'entrée (T1) est disposé au niveau de la position d'entrée (EIN) et le deuxième capteur de température (52) pour la détection de la température de sortie (T2) est disposé au niveau de la position de sortie (AUS).

11. Agencement (1) selon la revendication 10, dans lequel les quatrièmes moyens (50) sont formés par le premier capteur de température (51) et/ou par le deuxième capteur de température (52) des premiers moyens (51, 52), et dans lequel l'unité de commande (MC) est conçue pour déduire la température de fluide (T) de la température d'entrée (T1) détectée et/ou de la température de sortie (T2) détectée.

12. Dispositif de mesure de flux de chaleur (10) pour la mesure de flux de chaleur, en particulier calculateur d'énergie thermique, pour la mise en oeuvre du procédé selon l'une des revendications précédentes 1 à 8, comprenant

   - un boîtier (G),
   - une section de conduite (2'), en particulier un tube de mesure, reçue dans le boîtier (G),
   - un orifice d'admission et un orifice d'évacuation (EL, AL) pour la section de conduite (2') disposés au niveau du boîtier (G), dans lequel il est prévu que le mélange d'eau et de glycol ($H_2O$, GLY) traverse la section de mesure (MESS) à l'intérieur de la section de conduite (2),
   - un premier accès de mesure de température (11) pour le raccordement d'un premier capteur de température externe (61) pour la mesure d'une première température externe (T1), en particulier d'une température de départ, et/ou
   - un deuxième accès de mesure de température (12) pour le raccordement d'un deuxième capteur de température externe (52) pour la mesure d'une deuxième température externe (T2), en particulier d'une température de retour, et/ou
   - un capteur de température de fluide (50) pour la mesure d'une température de fluide (T), disposé dans le boîtier (G) dans la zone comprise entre l'admission (EL) et l'évacuation (AL),
   - des deuxièmes moyens (31, 32) pour la mesure du flux volumique (VS) du mélange d'eau et de glycol ($H_2O$, GLY) s'écoulant à travers la section de mesure (MESS),
   - des troisièmes moyens (51, 52) pour la détermination de l'atténuation ultrasonore ($\alpha$) à travers le mélange d'eau et de glycol ($H_2O$, GLY) dans la section de mesure (MESS), et
   - une unité de commande (MC), laquelle est reliée au premier et/ou au deuxième accès de mesure de température (11, 12) et/ou au capteur de température de fluide (50) ainsi qu'aux deuxièmes et troisièmes moyens (31, 32, 51, 52) et laquelle est conçue pour déterminer un flux de chaleur (WS) à partir d'une différence de température ($\Delta$T) au choix, entre la première température externe et la deuxième température externe (T1, T2), ou entre la température de fluide (T) et la deuxième température externe (T2), ou entre la première température externe (T1) et la température de fluide (T), ainsi qu'à partir du flux volumique (VS), à partir de l'atténuation ultrasonore (α), et à partir de la température de fluide (T), et pour délivrer une valeur actuelle du flux de chaleur (WS) et/ou une grandeur déduite de celle-ci, en particulier une valeur de compteur d'une énergie thermique cumulée, au niveau du dispositif de mesure de flux de chaleur (10) et/ou au niveau d'une interface de données (BUS) du dispositif de mesure de flux de chaleur (10).

**13.** Dispositif selon l'une des revendications 9 à 12,

- dans lequel les deuxièmes et troisièmes moyens (31, 32) comprennent au moins un agencement de mesure ultrasonore (30) avec un premier et un deuxième transducteur ultrasonore (31, 32),
- dans lequel le premier transducteur ultrasonore (31) est disposé et conçu pour l'émission d'un premier signal ultrasonore (US1) au niveau d'un début du tronçon de mesure (L) et le long de celui-ci (L), dans lequel le deuxième transducteur ultrasonore (32) est disposé et conçu pour la réception du premier signal ultrasonore (US1) au niveau d'une extrémité du tronçon de mesure (L), et/ou
- dans lequel le deuxième transducteur ultrasonore (31) est disposé et conçu pour l'émission d'un deuxième signal ultrasonore (US2) au niveau de l'extrémité du tronçon de mesure (L) et le long de celui-ci (L) dans le sens contraire, dans lequel le premier transducteur ultrasonore (31) est disposé et conçu pour la réception du deuxième signal ultrasonore (US2) au niveau du début du tronçon de mesure (L),
- dans lequel le tronçon de mesure (L) s'étend à l'intérieur de la section de mesure (MESS) selon un angle aigu (β) par rapport au sens d'écoulement du mélange d'eau et de glycol ($H_2O$, GLY) ou au sens contraire à celui-ci,
- dans lequel l'unité de commande (MC) est reliée par technologie de signaux et/ou de données au premier transducteur ultrasonore (31) et au deuxième transducteur ultrasonore (32), et
- dans lequel l'unité de commande (MC) est conçue pour commander les premier et deuxième transducteurs ultrasonores (31, 32) en alternance pour l'émission et la réception d'un signal ultrasonore (US1, US2) respectif pour la détermination de la vitesse d'écoulement moyenne ($v_M$) et pour la détermination de l'atténuation ultrasonore (α) dans des phases de mesure respectivement distinctes les unes des autres dans le temps.

**14.** Dispositif selon l'une des revendications 9 à 13, dans lequel l'unité de commande (MC) comprend une mémoire non volatile à laquelle l'unité de commande (MC) a accès par technologie de données, et

- dans lequel, dans la mémoire non volatile est stocké(e) un tableau de données (TAB) ou une fonction mathématique pour la détermination d'une valeur actuelle du rapport de mélange R qui mappe respectivement l'atténuation ultrasonore (α) et la température de fluide (T) sur le rapport de mélange R du mélange d'eau et de glycol (FL), et/ou
- dans lequel, dans la mémoire non volatile est stocké(e) un tableau de données (TAB) ou une fonction mathématique pour la détermination d'une valeur actuelle pour la densité (ρ) et pour la chaleur spécifique ($c_p$) qui mappe respectivement le rapport de mélange R établi et la température de fluide (T) mesurée sur la densité (ρ) à déterminer et la chaleur spécifique ($c_p$) à déterminer du mélange d'eau et de glycol (FL), et/ou
- dans lequel, dans la mémoire non volatile est stocké(e) un tableau de données (TAB) ou une fonction mathématique pour la détermination d'une valeur de compensation K actuelle pour la vitesse d'écoulement moyenne mesurée ($v_M$) qui mappe respectivement la vitesse d'écoulement moyenne mesurée ($v_M$), la température de fluide (T) et le rapport de mélange R sur un quotient de la vitesse d'écoulement moyenne effective (v) et de la vitesse d'écoulement moyenne mesurée ($v_m$).

**15.** Vanne de régulation de débit réglable (20), en particulier Smart Valve, avec un dispositif de mesure de flux de chaleur (10) selon l'une des revendications précédentes 12 à 14, avec une unité de vanne (13) reçue de préférence dans le boîtier (G), commandable au moyen de l'unité de commande (MC), pour l'ajustement d'un flux volumique (VS) identique circulant à travers l'unité de vanne (13) et à travers la section de mesure (MESS).

**16.** Programme informatique avec des sous-programmes pour la mise en œuvre des étapes de procédé du procédé selon l'une des revendications 1 à 8 par une unité de processeur d'une unité de commande (MC) d'un dispositif (1, 10, 20) selon l'une des revendications précédentes 9 à 15 conçue sous la forme d'un microcontrôleur, le programme informatique étant enregistré ou chargeable dans une mémoire du microcontrôleur (MC).

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012065276 A1
- JP 6586351 B
- EP 3467490 A1
- DE 102007015609 A1